# EUROPEAN PATENT APPLICATION

(11) **EP 3 952 320 A1**
(43) Date of publication of application: **09.02.2022**
(21) Application number: 20776886.2
(22) Date of filing: 11.03.2020
(51) Int. Cl.: H04Q 9/00, G06Q 10/00, G06Q 50/10

(54) **INFORMATION PROCESSING DEVICE, INFORMATION PROCESSING METHOD, AND INFORMATION PROCESSING PROGRAM**

(30) Priority: 26.03.2019 JP 2019059279
(71) Applicant: Sony Group Corporation, Tokyo 108-0075 (JP)
(72) Inventor: OGAWA, Hiroaki, Tokyo 108-0075 (JP); KAMADA, Chie, Tokyo 108-0075 (JP); TSUNOO, Emiru, Tokyo 108-0075 (JP); MAEDA, Yoshinori, Tokyo 108-0075 (JP); TAKAHASHI, Akira, Tokyo 108-0075 (JP); TOTSUKA, Noriko, Tokyo 108-0075 (JP); TATEISHI, Kazuya, Tokyo 108-0075 (JP); KOYAMA, Yuichiro, Tokyo 108-0075 (JP); TAKEDA, Yuki, Tokyo 108-0075 (JP); WATANABE, Hideaki, Tokyo 108-0075 (JP); FUKUI, Akira, Tokyo 108-0075 (JP); KURODA, Kan, Tokyo 108-0075 (JP)
(74) Representative: 2SPL Patentanwälte PartG mbB
(86) International application number: PCT/JP2020/010505
(87) International publication number: WO 2020/195821

(57) **Abstract**

An information processing apparatus includes a control unit that performs a process of detecting, as sensing information, information that indicates an operation status of a device, and a process of judging, when the sensing information has been detected, by referring to a storage unit that stores therein response content associated with the sensing information, whether to notify a user of the operation status of the device.

## Description

### Field

The present disclosure relates to an information processing apparatus, an information processing method, and an information processing program. In particular, the present disclosure relates to a process of notifying a user of behaviors of devices.

### Background

With the development of electrification of life, opportunities for a plurality of devices, such as home electrical appliances, to simultaneously operate is increasing. In view of such circumstances, a technology for smoothly and actively use the plurality of devices is proposed.

For example, there is a known technology in which a device connected to a network notifies a user of an error via the network and the user is able to know the result thereof via an e-mail message (for example, Patent Literature 1). Furthermore, there is a known technology for coping with a failure by converting and outputting product information that is used to diagnose a state of a home electrical appliance device, by capturing an image of an output signal so as to diagnose the state of the home electrical appliance device, and diagnosing whether the home electrical appliance device has failed (for example, Patent Literature 2).

### Citation List

### Patent Literature

Patent Literature 1: Japanese Laid-open Patent Publication No. 5-274317
Patent Literature 2: Japanese Laid-open Patent Publication No. 2013-149252

### Summary

### Technical Problem

According to the conventional technology described above, it is possible for a user to smoothly operate a plurality of devices, such as home electrical appliances.

However, the conventional technology has room for improvement. For example, in the conventional technology, if a home electrical appliance is not compatible with network communication or if a home electrical appliance is not able to display information to be recognized by the device that makes a diagnosis, it is difficult to notify the user of the status of the device. Namely, in some cases, the conventional technology is not able to be implemented unless a combination of a device that sends a notification and a device that is able to communicate, in some way, with the device that sends the notification is used.

Accordingly, the present disclosure proposes an information processing apparatus, an information processing method, and an information processing program capable of smoothly operating various devices without depending on the performance of each of the devices.

### Solution to Problem

According to the present disclosure, an information processing apparatus includes a control unit that performs a process of detecting, as sensing information, information that indicates an operation status of a device, and a process of judging, when the sensing information has been detected, by referring to a storage unit that stores therein response content that is associated with the sensing information, whether to notify a user of the operation status of the device.

### Brief Description of Drawings

FIG. 1 is a diagram illustrating an example of information processing according to a first embodiment.
FIG. 2 is a diagram illustrating a configuration example of an information processing apparatus according to the first embodiment.
FIG. 3 is a diagram illustrating an example of a response content table according to the first embodiment.
FIG. 4 is a flowchart illustrating the flow of a process according to the first embodiment.
FIG. 5 is a diagram illustrating an example of information processing according to a second embodiment.
FIG. 6 is a diagram illustrating a configuration example of an information processing apparatus according to the second embodiment.
FIG. 7 is a diagram illustrating an example of a device information table according to the second embodiment.
FIG. 8 is a flowchart illustrating the flow of a process according to the second embodiment.
FIG. 9 is a diagram illustrating an example of a response content table according to a modification of the second embodiment.
FIG. 10 is a diagram illustrating an example of information processing according to a third embodiment.
FIG. 11 is a diagram illustrating an example of a response content table according to another embodiment.
FIG. 12 is a diagram illustrating a user information table according to another embodiment.
FIG. 13 is a block diagram illustrating a first example of a system configuration according to the present disclosure.
FIG. 14 is a block diagram illustrating a second example of the system configuration according to the present disclosure.
FIG. 15 is a block diagram illustrating a third example of the system configuration according to the present disclosure.
FIG. 16 is a block diagram illustrating a fourth example of the system configuration according to the present disclosure.
FIG. 17 is a block diagram illustrating a fifth example of the system configuration according to the present disclosure.
FIG. 18 is a diagram illustrating a client-server system as one of specific examples of the system configuration according to the present disclosure.
FIG. 19 is a diagram illustrating a distributed system as another one of specific examples of the system configuration according to the present disclosure.
FIG. 20 is a block diagram illustrating a sixth example of the system configuration according to the present disclosure.
FIG. 21 is a block diagram illustrating a seventh example of the system configuration according to the present disclosure.
FIG. 22 is a block diagram illustrating an eighth example of the system configuration according to the present disclosure.
FIG. 23 is a block diagram illustrating a ninth example of the system configuration according to the present disclosure.
FIG. 24 is a diagram illustrating an example of a system that includes an intermediate server as one of more specific examples of the system configuration according to the present disclosure.
FIG. 25 is a diagram illustrating an example of a system that includes a terminal device functioning as a host as one of more specific examples of the system configuration according to the present disclosure.
FIG. 26 is a diagram illustrating an example of a system that includes an edge server as one of more specific examples of the system configuration according to the present disclosure.
FIG. 27 is a diagram illustrating an example of a system that includes fog computing as one of more specific examples of the system configuration according to the present disclosure.
FIG. 28 is a block diagram illustrating a tenth example of the system configuration according to the present disclosure.
FIG. 29 is a block diagram illustrating an eleventh example of the system configuration according to the present disclosure.
FIG. 30 is a hardware configuration diagram illustrating an example of a computer that implements the function of the device.

### Description of Embodiments

Preferred embodiments of the present disclosure will be explained in detail below with reference to the accompanying drawings. Furthermore, in each of the embodiments, components having the same functions are assigned the same reference numerals and descriptions of overlapping portions will be omitted.

The present disclosure will be explained in the following order of items.
1. First Embodiment
   1-1. Example of information processing according to first embodiment
   1-2. Configuration of information processing apparatus according to first embodiment
   1-3. Procedure of information processing according to first embodiment
   1-4. Modification according to first embodiment
2. Second Embodiment
   2-1. Example of information processing according to second embodiment
   2-2. Configuration of information processing apparatus according to second embodiment
   2-3. Procedure of information processing according to second embodiment
   2-4. Modification according to second embodiment
3. Third Embodiment
4. Other Embodiments
   4-1. Detection of abnormal sound
   4-2. Notification in accordance with user attribute
   4-3. Notification in accordance with usage status of device
   4-4. Configuration of each device
   4-5. Mode of information processing system
   4-6. Others
5. Effects of information processing apparatus according to the present disclosure
6. Hardware configuration

### (1. First Embodiment)

### [1-1. Example of information processing according to first embodiment]

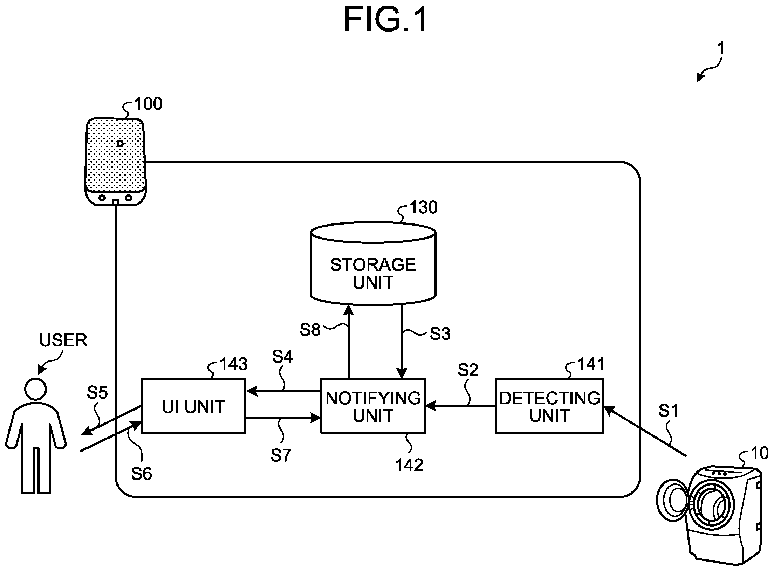

An example of information processing according to a first embodiment of the present disclosure will be described with reference to FIG. 1. FIG. 1 is a diagram illustrating an example of the information processing according to the first embodiment. FIG. 1 illustrates an example in which the information processing according to the first embodiment is performed by an information processing system 1 that includes an information processing apparatus 100 according to the present disclosure and a home electrical appliance 10 that is an example of a device according to the present disclosure.

The information processing apparatus 100 is an example of an information processing apparatus according to the present disclosure. For example, the information processing apparatus 100 has a function (also referred to as an agent function or the like) for conducting a dialogue with a user via a voice or a text and performs various kinds of information processing, such as voice recognition or response generation for a user. Furthermore, the information processing apparatus 100 is also able to take a role in performing various kinds of control with respect to what is called Internet of Things (IoT) devices or the like in accordance with a request of a user who uses the agent function. The information processing apparatus 100 is, for example, a smart speaker, a smartphone, a television, a tablet terminal, or the like. Furthermore, other than the smart speaker or the like, the information processing apparatus 100 may also be a wearable device, such as a watch type terminal or an eyeglasses type terminal, or a product of a home electrical appliance, such as a refrigerator or a washing machine, having an agent function.

The home electrical appliance 10 is an example of a device according to the present disclosure. For example, the home electrical appliance 10 is a product of a home electrical appliance that is installed and used in a home of a user or the like. In the example illustrated in FIG. 1, it is assumed that the home electrical appliance 10 is a washing machine. Furthermore, in the first embodiment, it is assumed that the home electrical appliance 10 does not have a function for communicating with the information processing apparatus 100 via a network. Furthermore, in the example illustrated in FIG. 1, only a single of the home electrical appliance 10 is illustrated; however, the number of the home electrical appliances 10 is not limited to the number illustrated in FIG. 1.

In the example illustrated in FIG. 1, the information processing apparatus 100 uses various sensors, such as a microphone or a camera, and detects (sensing) an operation status of the home electrical appliance 10. Furthermore, the information processing apparatus 100 acquires detected information (hereinafter, referred to as "sensing information"). For example, the information processing apparatus 100 is able to acquire a sound (for example, an electronic sound for notification of a start of washing or an end of washing, etc.) that is output by the home electrical appliance 10 and is able to, furthermore, reproduce the acquired sound. According to the process, the information processing apparatus 100 is able to notify a user of the electronic sound that has been emitted by the home electrical appliance 10 even if the user is not present in the vicinity of the home electrical appliance 10.

Incidentally, in an environment in which a user uses a plurality of home electrical appliances, if all of the sounds acquired by the information processing apparatus 100 are notified to the user, this may cause a troublesome situation for the user. For example, as an example, in a case of the end of the washing, there is meaning in notifying the user who is present in a room that is far away from the washing machine of the end of washing; however, it is redundant and troublesome for the user who is present in front of the washing machine to receive a notification of the stop of the washing machine. Namely, regarding the notification of the operation status of the product of the home electrical appliance that is to be operated by the information processing apparatus 100, if information that is certainly able for the user to know is notified one by one, convenience may possibly be, on the contrary, reduced for the user. In this way, in the technology of notification related to a state of the home electrical appliance, there is a problem to be solved in order to smoothly operate a plurality of home electrical appliances without reducing convenience for the user.

Thus, the information processing apparatus 100 according to the present disclosure solves the above described problem by the information processing that will be described below.

Specifically, the information processing apparatus 100 according to the present disclosure detects, as sensing information, information that indicates an operation status of a home electrical appliance, and judges by referring to, when the sensing information has been detected, a storage unit that stores therein response content that is associated with the sensing information, whether to notify the user of the operation status of the home electrical appliance. Consequently, the information processing apparatus 100 is able to perform notification in accordance with a request of a user without sending a notification of the status of the home electrical appliance to the user one by one; therefore, it is possible to appropriately operate a plurality of home electrical appliances without causing the user to feel troublesome.

In the following, an example of information processing according to the first embodiment of the present disclosure will be described in line with the flow of the information processing with reference to FIG. 1. Furthermore, in the example illustrated in FIG. 1, the processing units included in the information processing apparatus 100 are conceptually described as a detecting unit 141, a notifying unit 142, and a UI unit 143; however, these units are only for convenience of description and the information processing apparatus 100 need not always have the functional configuration illustrated in FIG. 1.

First, the detecting unit 141 according to the information processing apparatus 100 detects, as an example of sensing information, an electronic sound (hereinafter, the sound emitted for this type of notification is sometimes referred to as a "notification sound") that is emitted by the home electrical appliance 10 (Step S1). For example, based on an algorithm for pattern matching with notification sounds that are previously stored in a storage unit 130, the information processing apparatus 100 detects a notification sound emitted by the home electrical appliance 10. Furthermore, in addition to the example described above, the information processing apparatus 100 may also detect a notification sound by using various known methods. For example, the information processing apparatus 100 may also detect a notification sound emitted by the home electrical appliance 10 by using a sound recognition model learned such that the notification sound is distinguished from an operation sound (a vibration sound or the like that is emitted during washing) that is output by the home electrical appliance 10.

Furthermore, the information processing apparatus 100 may also detect, as the sensing information, not only the notification sound but also an electronic display emitted by the home electrical appliance 10. For example, the information processing apparatus 100 may also detect, by using a camera or the like, a flashing display at the end of washing.

The information processing apparatus 100 sends the detected notification sound to the notifying unit 142 (Step S2). The notifying unit 142 according to the information processing apparatus 100 judges whether the notification sound detected by the detecting unit 141 is a notification sound that needs to be notified to the user.

Specifically, the information processing apparatus 100 refers to the storage unit 130 (Step S3). Although details will be described later, the storage unit 130 stores therein, as a data table, information related to notification availability indicating whether a notification sound needs to be notified to user as well as information (for example, a template of a notification sound) for distinguishing the detected notification sound. Namely, the information processing apparatus 100 refers to the storage unit 130 and judges whether the notification sound detected at Step S1 is the "notification sound that needs to be notified to the user".

If the information processing apparatus 100 judges that the notification sound detected at Step S1 is the notification sound that needs to be notified to the user, the information processing apparatus 100 sends data (waveform data, signal data, or the like for reproducing the notification sound) on the notification sound to a user interface (UI) unit 143 (Step S4).

The UI unit 143 according to the information processing apparatus 100 is a processing unit that sends and receives information to and from the user. For example, the UI unit 143 controls a process of displaying information on a display included in the information processing apparatus 100 or a process of outputting a voice from a voice output device (loudspeaker, etc.) included in the information processing apparatus 100.

The information processing apparatus 100 notifies the user of the notification sound sent from the notifying unit 142 (Step S5). For example, at Step S1, the information processing apparatus 100 outputs that same sound as the notification sound that is detected from the home electrical appliance 10.

At this time, the information processing apparatus 100 may also make a predetermined inquiry to the user by outputting response content, which is set in advance, together with the notification sound. For example, the information processing apparatus 100 makes an inquiry, such as "a sound like this is detected, so shall I notify you of this sound from now on?".

After that, the information processing apparatus 100 receives a reaction from the user (Step S6). For example, the information processing apparatus 100 receives a reaction indicating that, after the user recognized the notification sound, the user did not refuse the notification of the notification sound (for example, a voice of "got it" or "thank you" that does not include a negative expression). Alternatively, the information processing apparatus 100 receives a reaction indicating that, after the user recognized the notification sound, the user refused the notification of the notification sound (for example, a voice of "it does not need to be notified" or "be quiet" that includes a negative expression). Alternatively, the information processing apparatus 100 receives a reaction of the user to the inquiry that has been made to the user (for example, a voice indicating a decision of the user that is used to judge a response when the same sound is detected in the future, such as "please let me know that sound from now on").

The information processing apparatus 100 sends the received reaction to the notifying unit 142 (Step S7). Subsequently, the information processing apparatus 100 reflects the received reaction to the database in the storage unit 130 (Step S8). In other words, the information processing apparatus 100 learns, based on the reaction from the user, whether to give the user a notification related to the notification sound.

As described above, the information processing apparatus 100 detects the information indicating the operation status of the home electrical appliance 10 as the sensing information. Then, if the sensing information is detected, the information processing apparatus 100 refers to the storage unit 130 that stores therein the response content associated with the sensing information and judges whether the operation status of the home electrical appliance 10 is notified to the user.

In this way, when the home electrical appliance 10 emits some kind of notification sound, the information processing apparatus 100 judges whether to notify the user of the subject information and then gives a notification to the user. Consequently, the information processing apparatus 100 is able to notify the user of a notification sound, such that the information processing apparatus 100 does not notify the user of a notification sound that is not desired by the user and notifies the user of a notification sound that is desired by the user, so that the information processing apparatus 100 is able to perform notification that meets a request of the user. Furthermore, if the user is not present in the vicinity of the home electrical appliance 10, the information processing apparatus 100 is able to deliver the notification to the user on behalf of the home electrical appliance 10, so that the information processing apparatus 100 is able to improve convenience for the user. Furthermore, even in a state in which the home electrical appliance 10 is not connected to a network (for example, in a case in which the home electrical appliance 10 is not an IoT device), the information processing apparatus 100 detects a sound emitted by the home electrical appliance 10 by using a microphone or the like, so that the information processing apparatus 100 is able to reliably detect the notification sound regardless of the function of the home electrical appliance 10. As a result, the information processing apparatus 100 is able to smoothly operate various kinds of the home electrical appliance 10 regardless of the performance of each of the home electrical appliances 10.

Furthermore, FIG. 1 illustrates an example in which a single piece of the information processing apparatus 100 performs the information processing according to the present disclosure; however, a plurality of the information processing apparatuses 100 may also be installed. For example, the information processing according to the present disclosure may also be performed in cooperation with a first smart speaker that is installed in the vicinity of the user and a second smart speaker that is installed in the vicinity of the home electrical appliance 10. In this case, the second smart speaker sends the information related to the detected notification sound to the first smart speaker via a network. The first smart speaker outputs the notification sound emitted from the home electrical appliance 10 to the user together with the information on the location (for example, a kitchen, etc.) in which the second smart speaker is installed. Specifically, when the first smart speaker outputs the notification sound emitted by the home electrical appliance 10, the first smart speaker sends a notification, such as "this kind of sound is emitted from a kitchen". Consequently, the information processing apparatus 100 is able to certainly deliver, to the user, the information that is related to the home electrical appliance 10 and that is not able to know by the user.

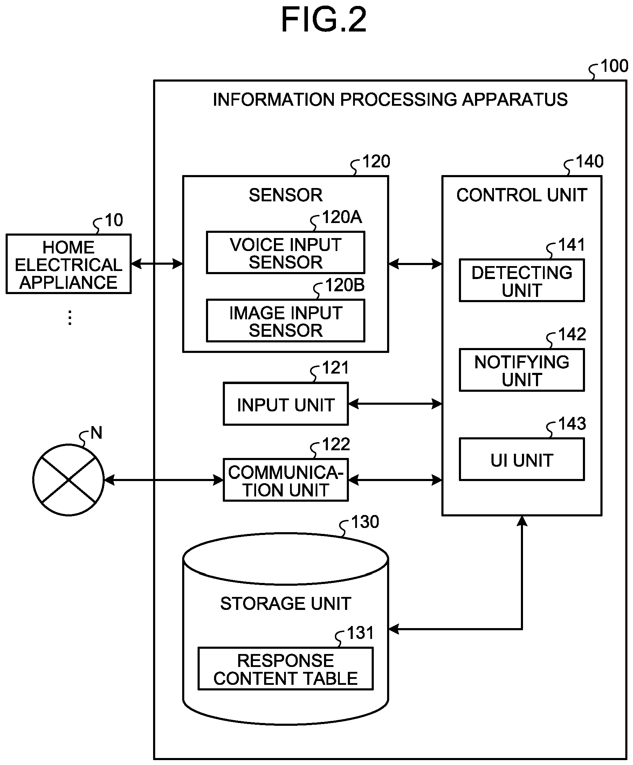

In the following, the information processing apparatus 100 that performs the information processing described above and a configuration of the information processing system 1 that includes the information processing apparatus 100 will be described in detail with reference to FIG. 2 and the subsequent drawings.

### [1-2. Configuration of information processing apparatus according to first embodiment]

The configuration of the information processing apparatus 100 according to the first embodiment will be described with reference to FIG. 2. FIG. 2 is a diagram illustrating a configuration example of the information processing apparatus 100 according to the first embodiment.

As illustrated in FIG. 2, the information processing apparatus 100 includes a sensor 120, an input unit 121, a communication unit 122, the storage unit 130, and a control unit 140.

The sensor 120 is a device for detecting various kinds of information. The sensor 120 includes a voice input sensor 120A that collects, for example, a notification sound emitted by the home electrical appliance 10 and a voice of a speech given by the user. The voice input sensor 120A is, for example, a microphone. Furthermore, the sensor 120 includes, for example, an image input sensor 120B. The image input sensor 120B is, for example, a camera for capturing an image of the home electrical appliance 10, the user, or a situation of the user in the home. For example, the image input sensor 120B is, for example, a stereo camera or the like that is able to acquire the distance or the direction (depth data, etc.) to an observation target.

Furthermore, the sensor 120 may also include an acceleration sensor, a gyro sensor, or the like. Furthermore, the sensor 120 may also include a sensor that detects the current position of the information processing apparatus 100. For example, the sensor 120 may also receive a radio wave transmitted from a global positioning system (GPS) satellite and detect position information (for example, a latitude and a longitude) indicating the current position of the information processing apparatus 100 based on the received radio wave.

Furthermore, the sensor 120 may also include a radio wave sensor that detects a radio wave emitted from an external device or an electromagnetic wave sensor that detects an electromagnetic wave. Furthermore, the sensor 120 may also detect an environment in which the information processing apparatus 100 is placed. Specifically, the sensor 120 may also include an illuminance sensor that detects illuminance around the information processing apparatus 100, a temperature sensor that detects temperature around the information processing apparatus 100, a humidity sensor that detects humidity around the information processing apparatus 100, a geomagnetic sensor that detects a magnetic field at a position at which the information processing apparatus 100 is located.

Furthermore, the sensor 120 need not always be arranged inside the information processing apparatus 100. For example, the sensor 120 may also be installed outside the information processing apparatus 100 as long as it is possible to send information that is sensed using communication or the like to the information processing apparatus 100.

The input unit 121 is a device for receiving various operations from the user. For example, the input unit 121 is implemented by a keyboard, a mouse, a touch panel, or the like. If the information processing apparatus 100 is a smart speaker, the input unit 121 receives an input from the user by a voice; therefore, the voice input sensor 120A may also serve as the input unit 121.

The communication unit 122 is implemented by, for example, a network interface card (NIC), or the like. The communication unit 122 is connected to the network N in a wired or wireless manner and sends and receives information to and from the other information processing apparatus 100, an external server that performs a voice recognition process, or the like via the network N.

The storage unit 130 is implemented by, for example, a semiconductor memory device, such as a random access memory (RAM) or a flash memory, or a storage device, such as a hard disk or an optical disk. In the first embodiment, the storage unit 130 includes a response content table 131.

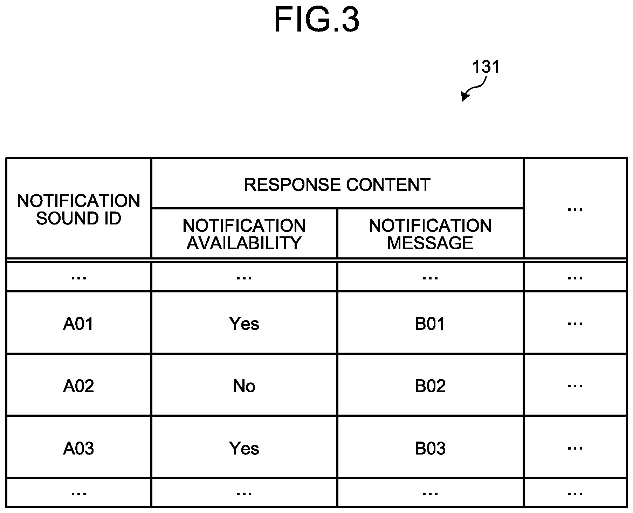

The response content table 131 stores therein response content that is used at the time of outputting a response to the user when a notification sound is detected. FIG. 3 illustrates an example of the response content table 131 according to the first embodiment. FIG. 3 illustrates an example of the response content table 131 according to the first embodiment. In the example illustrated in FIG. 3, the response content table 131 has items, such as "notification sound ID", "response content", and the like. Furthermore, "response content" includes a sub item, such as "notification availability" and "notification message".

The "notification sound ID" indicates identification information for identifying a notification sound. Furthermore, although not illustrated in FIG. 3, the notification sound ID may also include information on waveform data, signal data, or the like for identifying the detected notification sound.

The "response content" indicates the content of the response that is output to the user when a notification sound is detected. The "notification availability" indicates whether to notify the user of a notification sound. The "notification message" indicates content of a message that is output together with the notification sound. In the example illustrated in FIG. 3, the item of the notification message is conceptually illustrated as "B01"; however, in practice, in the item of the notification message, content of a specific voice that is output to the user is stored.

Namely, in FIG. 3, as an example of the information registered in the response content table 131, the notification sound identified by the notification sound ID of "A01" indicates a notification sound that is to be notified to the user when the notification sound is detected (notification availability is "Yes") and indicates that the notification message is "B01".

A description will be continued by referring back to FIG. 2. The control unit 140 is a processing unit that executes information processing performed by the information processing apparatus 100. As illustrated in FIG. 2, the control unit 140 includes the detecting unit 141, the notifying unit 142, and the UI unit 143. The control unit 140 is implemented by, for example, a central processing unit (CPU), a micro processing unit (MPU), a graphics processing unit (GPU), or the like executing, in a random access memory (RAM) or the like as a work area, a program (for example, an information processing program according to the present disclosure) stored in the information processing apparatus 100. Furthermore, the control unit 140 is a controller and may also be implemented by, for example, an integrated circuit, such as an application specific integrated circuit (ASIC) or a field programmable gate array (FPGA).

The detecting unit 141 detects the information that indicates the operation status of the device (the home electrical appliance 10) as sensing information. For example, the detecting unit 141 various kinds of information detected by the sensor 120 as sensing information.

For example, the detecting unit 141 detects, as the sensing information, a notification sound that is emitted by the home electrical appliance 10 in order to notify the user of an operation status. Specifically, the detecting unit 141 detects an electronic sound at the time when the home electrical appliance 10 starts an operation or an electronic sound at the time of the end of the operation.

For example, the detecting unit 141 refers to a template of notification sounds that are stored in the storage unit 130 in advance, and then, detects a notification sound by checking (pattern matching) the template against the notification sound emitted from the home electrical appliance 10. Alternatively, the detecting unit 141 detects an electronic sound emitted by the home electrical appliance 10 or detects a notification sound by using a learning model or the like that is used to recognize or classify the type of the electronic sounds.

Furthermore, the detecting unit 141 may also detects a voice spoken by the user from among the voices detected by the sensor 120. For example, the detecting unit 141 analyzes a speech intension of the user included in the detected voice by way of an automatic speech recognition (ASR) process or a natural language understanding (NLU) process, and then, detects the analyzed information.

Furthermore, as a result of analysis of the voice, if the intention of the user is not able to be found, the detecting unit 141 may also deliver this state to the UI unit 143. For example, as a result of analysis, if an intention that is not able to be estimated from the speech of the user is included, the detecting unit 141 delivers the content thereof to the UI unit 143. In this case, the UI unit 143 outputs a response (a speech, such as "please say again", etc.) that requests the user to precisely give a speech once again regarding the unclear information.

Furthermore, the detecting unit 141 may also detect various kinds of information related to facial information on the user or a movement of the user, such as orientation, inclination, a movement, a moving speed the body of the user, via the image input sensor 120B, an acceleration sensor, an infrared sensor, or the like. Namely, the detecting unit 141 may also detect, via the sensor 120, as context, various physical amounts, such as location information, acceleration, temperature, gravity, rotation (angular velocity), illuminance, geomagnetism, pressure, proximity, humidity, or a rotation vector.

Furthermore, the detecting unit 141 may also detect information related to communication. For example, if a plurality of the information processing apparatuses 100 are present, the detecting unit 141 may also periodically detect a connection status between the information processing apparatuses 100. The connection status mentioned here is information or the like that indicates whether, for example, two-way communication is established.

The notifying unit 142 refers to, when sensing information is detected, the storage unit 130 that stores therein response content that is associated with the sensing information, and then, judges whether to notify the user of the operation status of the device. Furthermore, the operation status of the device may also be the notification sound itself detected by the detecting unit 141 or may also be a message or the like that indicates the operation status of the device (a message indicating the end of the operation of the home electrical appliance 10, etc.).

For example, if a notification sound is detected by the detecting unit 141, the notifying unit 142 refers to the storage unit 130 that stores therein the response content that is associated with the notification sound and judges whether to notify the user of the operation status of the device. Specifically, the notifying unit 142 refers to the response content of the detected notification sound and, if the subject notification sound is a notification sound that is set to be notified to the user, performs control such that the subject notification sound is notified to the user. In contrast, if the detected notification sound is a notification sound that is not set to be notified to the user, the notifying unit 142 performs control such that the subject notification sound is not notified to the user. Furthermore, if the detected notification sound is not stored in the storage unit 130 and whether or not to notify the user of the status is not set, the notifying unit 142 may also notify the user of the subject notification sound together with a message indicating that this notification sound is detected for the first time. In this case, the notifying unit 142 may also send an inquiry, such as "from now on, shall I notify you of this notification sound", to the user.

Furthermore, after notifying the user of the operation status of the device, the notifying unit 142 updates, based on the reaction received from the user, the response content that is associated with the sensing information stored in the storage unit 130.

Specifically, the notifying unit 142 updates, based on the reaction received from the user, the setting that indicates whether the operation status of the device associated with the detected sensing information is to be notified to the user (for example, the information stored in the item of "notification availability" illustrated in FIG. 3).

More specifically, the notifying unit 142 recognizes the voice received from the user and updates, based on the reaction of the user that is in accordance with the result of the voice recognition, the setting that indicates whether to notify the user of the operation status of the device associated with the detected sensing information. For example, if the notifying unit 142 receives a positive reaction, such as "thank you", from the user who is notified of the operation status of the device, the notifying unit 142 updates (or maintains) the setting such that the operation status associated with the subject notification sound is notified to the user as in the past. Alternatively, if the notifying unit 142 receives a negative reaction, such as "it does not need to be notified" from the user who is notified of the operation status of the device, the notifying unit 142 updates the setting such that the operation status associated with the subject notification sound is not to be notified to the user from now on.

Furthermore, when the notifying unit 142 notifies the user of the operation status of the device, the notifying unit 142 may also notify the user of, together with the operation status, the information related to the location in which the device is installed. For example, if a plurality of the information processing apparatuses 100 is installed in the home of the user, each of the information processing apparatuses 100 is able to store the location in which each of the devices is installed (information indicating a category, such as the home of the user, a kitchen, or a lavatory). Then, when the notifying unit 142 notifies the user of the notification sound, the notifying unit 142 also notifies the installation location of the information processing apparatus 100 that has detected the operation status of the device. Specifically, the notifying unit 142 notifies the user of the notification sound together with the message indicating, for example, that "a sound like this is output from the kitchen". Consequently, the user is able to make a rough prediction which of the home electrical appliances 10 emits the notification sound. Furthermore, as described above, the information processing apparatus 100 according to the present disclosure sometimes performs the information processing according to the present disclosure in cooperation with a plurality of devices. In this case, a device that has judged whether to notify the user of the operation status of the device and a device that notifies the user of the operation status may also be different devices. Namely, the notification process performed by the notifying unit 142 includes not only the process in which the own device sends a notification to the user but also the process in which the own device controls another device and causes the other device to send a notification to the user.

The UI unit 143 is a processing unit that sends and receives information to and from the user. For example, the UI unit 143 functions as an interface that outputs information (sound information or the like on a notification sound, etc.) notified by the notifying unit 142 and that receives an input of a voice from the user.

Furthermore, the UI unit 143 includes a mechanism for outputting various kinds of information. For example, the UI unit 143 may also include a loudspeaker for outputting a sound or a display for outputting a video image. For example, the UI unit 143 outputs, by a voice, a notification generated by the notifying unit 142 to the user. Furthermore, the UI unit 143 may also convert the notification to the user generated by the notifying unit 142 to a screen display (image data) and output the converted image to the display. For example, the UI unit 143 may also display, together with a voice, video image data in which the message generated by the notifying unit 142 is displayed in a text mode. In addition, for example, the UI unit 143 may also give a notification to the user by voice and output the image acquired by the detecting unit 141 to the display.

### [1-3. Procedure of information processing according to first embodiment]

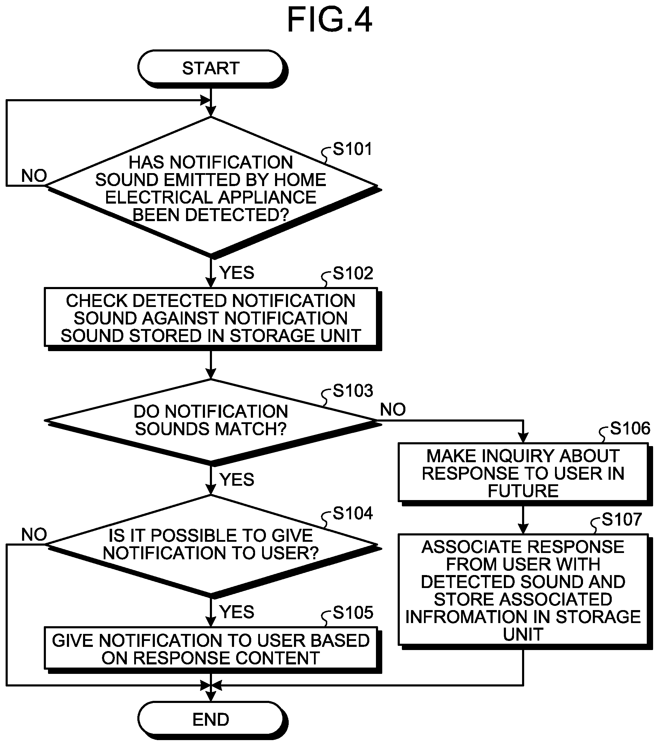

In the following, the procedure of the information processing according to the first embodiment will be described with reference to FIG. 4. FIG. 4 is a flowchart illustrating the flow of a process according to the first embodiment.

As illustrated in FIG. 4, the information processing apparatus 100 judges whether the notification sound emitted by the home electrical appliance 10 is detected (Step S101). If the notification sound is not detected (No at Step S101), the information processing apparatus 100 waits until the notification sound is detected.

In contrast, if the notification sound has been detected (Yes at Step S101), the information processing apparatus 100 checks the detected notification sound against the notification sound that is stored in the storage unit 130 (Step S102).

Then, the information processing apparatus 100 judges whether the detected notification sound matches the notification sound that is stored in the storage unit 130 (Step S103). If both of the notification sounds match (Yes at Step S103), the information processing apparatus 100 judges whether the subject notification sound is set so as to be able to be notified to the user (Step S104).

If the notification sound is set so as to be able to be notified to the user (for example, a case in which the item of the "notification availability" illustrated in FIG. 3 is "Yes") (Yes at Step S104), the information processing apparatus 100 notifies, based on the response content stored in the storage unit 130, the user of the operation status of the home electrical appliance 10 (Step S105). In contrast, if the notification sound is not set so as to be able to be notified to the user (No at Step S104), the information processing apparatus 100 ends the process without giving a notification to the user.

Furthermore, if the detected notification sound does not match the notification sound stored in the storage unit 130 (No at Step S103), the information processing apparatus 100 makes an inquiry, to the user, about a response that is desired by the user when the subject notification sound is detected in the future (Step S106).

Then, the information processing apparatus 100 associates a reply of the user with the detected sound (the notification sound detected at Step S101), and newly stores the associated information in the storage unit 130 (Step S107).

### [1-4. Modification according to first embodiment] Various modifications are possible for the information processing according to the first embodiment described. In the following, a modification of the first embodiment will be described.

For example, the information processing apparatus 100 does not need to have all of the components illustrated in FIG. 2. For example, the information processing apparatus 100 does not need to have the response content table 131 illustrated in FIG. 3. In this case, the information processing apparatus 100 may also access, via a network, an external server or the like that holds the information associated with the response content table 131 and may also acquire the information associated with the response content table 131.

Furthermore, the information processing apparatus 100 may also access the external server or the like and appropriately update the content held by the response content table 131. For example, if the information processing apparatus 100 receives registration of the home electrical appliance 10 that is used by the user, the information processing apparatus 100 may also acquire data on the notification sound associated with the home electrical appliance 10 from the external server or the like.

### (2. Second Embodiment)

### [2-1. Example of information processing according to second embodiment]

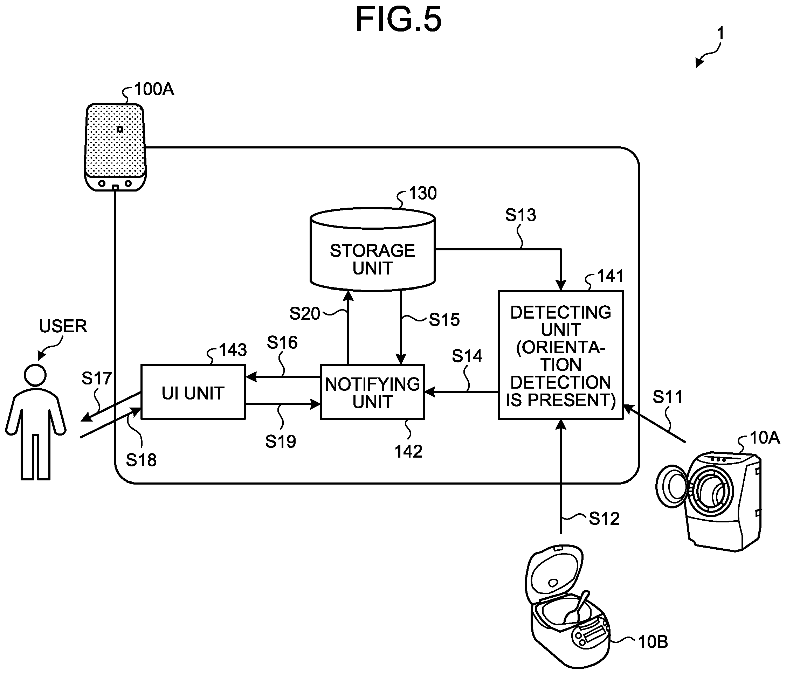

In the following, a second embodiment will be described. FIG. 5 is a diagram illustrating an example of information processing according to the second embodiment. The information processing according to the second embodiment is performed by an information processing apparatus 100A illustrated in FIG. 2. In the second embodiment, the information processing apparatus 100A detects a notification sound emitted from each of a home electrical appliance 10A and a home electrical appliance 10B. Furthermore, in the example illustrated in FIG. 2, the home electrical appliance 10A is a washing machine and the home electrical appliance 10B is a rice cooker. Furthermore, in a description below, the information processing apparatus 100 according to the first embodiment and the information processing apparatus 100A according to the second embodiment are simply referred to as the information processing apparatus 100 when they need not be distinguished from each other. Furthermore, in a description below, the home electrical appliance 10 according to the first embodiment and the home electrical appliance 10A or 10B according to the second embodiment are simply referred to as the home electrical appliance 10 when the need not be distinguished from each other.

In the example illustrated in FIG. 2, the detecting unit 141 according to the information processing apparatus 100A detects the electronic sound emitted by the home electrical appliance 10A or the home electrical appliance 10B (Step S11 and Step S12). At this time, the information processing apparatus 100A uses, for example, an array microphone or the like and detects the direction or the location in which the home electrical appliance 10A or the home electrical appliance 10B is installed. Furthermore, if the detected direction is within a field of view of a camera, the information processing apparatus 100A performs object recognition on a camera image. Consequently, the information processing apparatus 100A recognizes the home electrical appliance 10A or the home electrical appliance 10B that emits the detected notification sound.

After that, the information processing apparatus 100A refers to the information stored in the storage unit 130 (Step S13). Specifically, the information processing apparatus 100A refers to object label information (for example, information indicating which of the home electrical appliances is associated with the result of the image recognition) stored in the storage unit 130. Then, the information processing apparatus 100A sends, to the notifying unit 142, the information in which the notification sounds detected at Step S11 and Step S12 is associated with the home electrical appliance 10A and the home electrical appliance 10B, respectively, that emit the subject notification sound (Step S14). The process at Step S15 and the subsequent processes are the same as that described in the first embodiment; therefore, descriptions thereof will be omitted.

Namely, in the second embodiment, the information processing apparatus 100A identifies the home electrical appliance 10A or the home electrical appliance 10B that is associated with the sensing information is identified by the image recognition, and the operation status of the home electrical appliance 10A or the home electrical appliance 10B is notified to the user together with the information on the identified home electrical appliance 10A or the home electrical appliance 10B.

Consequently, the information processing apparatus 100A is able to notify the user of the operation status of the home electrical appliance 10A or the home electrical appliance 10B in more detail. Specifically, the information processing apparatus 100A is able to notify the user of the information that indicates the target that has emitted the notification sound, such as "a sound like this has been output from the rice cooker", together with the notification sound. Namely, the information processing apparatus 100A is able to further improve convenience of the user who uses a plurality of the home electrical appliances 10.

### [2-2. Configuration of information processing apparatus according to second embodiment]

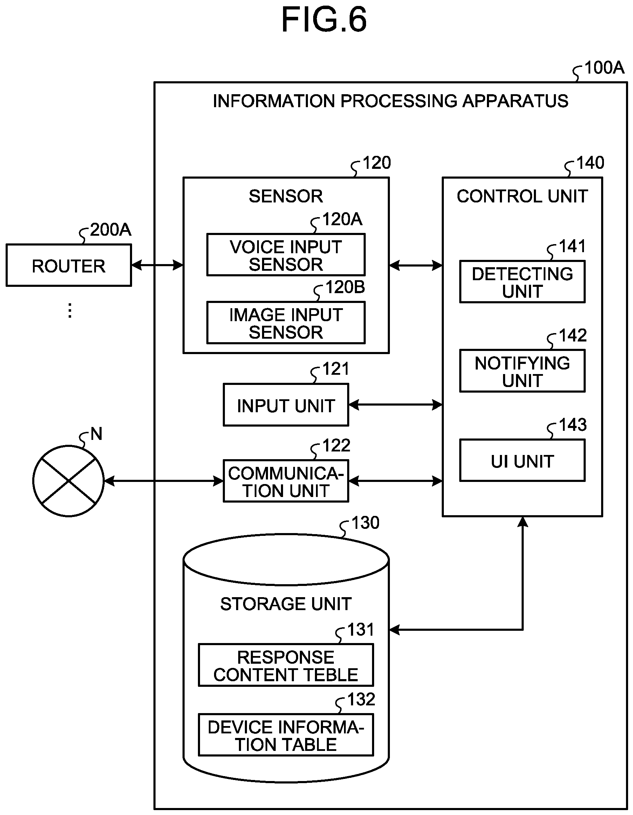

FIG. 6 is a diagram illustrating a configuration example of the information processing apparatus 100A according to the second embodiment. The information processing apparatus 100A further includes a device information table 132 as compared with the first embodiment.

### The device information table 132 stores therein information related to a device (home electrical appliance).

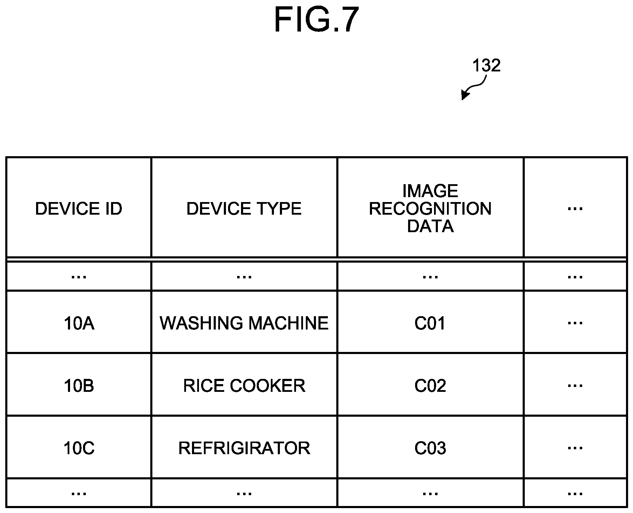

FIG. 7 is a diagram illustrating an example of the device information table 132 according to the second embodiment.

In the example illustrated in FIG. 7, the device information table 132 has items, such as "device ID", "device type", "image recognition data", and the like.

The "device ID" indicates identification information for identifying a device. Furthermore, in this specification, it is assumed that the same reference numerals are assigned to the device ID and the home electrical appliance 10. For example, the device that is identified by the device ID of "10A" denotes the "home electrical appliance 10A".

The "device type" indicates a type of the device. The type of the device indicates information classified by, for example, the attribute or the characteristic of the home electrical appliance 10. Specifically, the type of the device is a category of the home electrical appliance 10, such as a "washing machine", a "rice cooker", and a "refrigerator".

The "image recognition data" indicates the data obtained as the result of image recognition. For example, in image recognition, information indicating that an object included in the image is recognized as a "washing machine" or a "rice cooker" is attached to the object. The image recognition data is data indicating the result of this kind of image recognition. In the example illustrated in FIG. 7, the item of the image recognition data is conceptually illustrated as "C01" ; however, in practice, in the item of the image recognition data, specific data or the like that indicates, as the result of the image recognition, an extracted object or the type of the recognized object is stored. For example, if data denoted by "C01" is obtained by the image recognition performed by the information processing apparatus 100A, the information processing apparatus 100A is able to specify, by referring to the device information table 132, that the object associated with the data is the device that is identified by the device ID "10A" (in this example, the home electrical appliance 10A).

Namely, FIG. 7 illustrates, as an example of the information registered in the device information table 132, that the home electrical appliance 10A with the device ID of "10A" indicates that the device type is a "washing machine" and the image recognition data is "C01".

A description will be continued by referring back to FIG. 6. As described above, the information processing apparatus 100A according to the second embodiment performs direction recognition or image recognition on the home electrical appliance 10A or the home electrical appliance 10B and also performs image recognition on the user.

For example, the notifying unit 142 according to the second embodiment identifies the device associated with the sensing information by performing image recognition and notifies the user of the operation status of the device together with the information on the identified device.

Specifically, the notifying unit 142 notifies the user of, together with the operation status of the device, at least one of the type of the device, the name of the device, and the location in which the device is installed. For example, the control unit 140 notifies the user of the type or the name of the home electrical appliance 10 (for example, a "refrigerator", a "rice cooker", etc.) that has emitted the notification sound, or the location in which the home electrical appliance 10 is placed (for example, a "kitchen", a "lavatory", etc.).

Furthermore, the detecting unit 141 according to the second embodiment may also detect, by using the sensor 120, not only information on the device but also information on the user. Specifically, the detecting unit 141 detects a location position of the user in the home of the user. Then, the detecting unit 141 verifies whether the user is present in the vicinity of the home electrical appliance 10 that emits the notification sound.

Then, based on a positional relationship between the detected location position of the user and the device that is associated with the sensing information, the notifying unit 142 according to the second embodiment may also judge whether to notify the user of the operation status of the device.

Specifically, based on the distance between the detected location position of the user and the position in which the device associated with the sensing information is installed, the notifying unit 142 judges whether to notify the user of the operation status of the device. For example, the detecting unit 141 detects a distance between the user and the home electrical appliance 10 by using the sensor 120, such as a depth sensor, that is capable of measuring a distance. Alternatively, the detecting unit 141 estimates a distance between the user and the home electrical appliance 10 that are included in the same image by performing an image recognition process.

Then, if the distance between the user and the home electrical appliance 10 exceeds a predetermined threshold (for example, 10 meters, etc.), the notifying unit 142 notifies the user of the notification sound (i.e., the operation status of the home electrical appliance 10) emitted by the home electrical appliance 10. In contrast, if the distance between the user and the home electrical appliance 10 does not exceed the predetermined threshold, the notifying unit 142 does not need to notify the user of the notification sound emitted by the home electrical appliance 10.

Namely, the notifying unit 142 detects a positional relationship between the home electrical appliance 10 and the user, and then, judges whether a notification is given to the user. Consequently, the user is able to avoid a troublesome situation, such as a situation in which a notification of the operation status of the home electrical appliance 10 that is located very close to the user is received from the information processing apparatus 100A. In contrast, regarding the home electrical appliance 10 that is hard for the user to visually recognize the operation status thereof, the user is able to know the operation status via the information processing apparatus 100A. In this way, the information processing apparatus 100A is able to implement a notification process that has a high satisfaction level for the user.

Furthermore, the detecting unit 141 may also detect not only the distance between the user and the home electrical appliance 10 but also further detailed information. For example, the detecting unit 141 may also detect, by using a known image recognition process, orientation of the face of the user or orientation of the body. Then, the notifying unit 142 may also judge whether the operation status of the home electrical appliance 10 is to be notified to the user in accordance with the orientation of the face or the body of the user at the timing at which the home electrical appliance 10 emits the information that indicates the operation status or at the timing at which the home electrical appliance 10 detects, as the sensing information, the information that indicates the operation status.

Specifically, if the face or the body of the user faces the direction of the home electrical appliance 10 when the home electrical appliance 10 emits the notification sound, the notifying unit 142 judges that the user recognizes the notification sound emitted by the home electrical appliance 10. In this case, the notifying unit 142 judges that there is no need to again notify the user of the operation status of the home electrical appliance 10 and does not give a notification to the user. In contrast, if the face or the body of the user does not face the direction of the home electrical appliance 10 when the home electrical appliance 10 emits the notification sound, the notifying unit 142 judges that the user does not recognize the notification sound emitted by the home electrical appliance 10. In this case, the notifying unit 142 judges that the operation status of the home electrical appliance 10 needs to be notified to the user and gives a notification to the user. In this way, the information processing apparatus 100A is able to perform the notification process in accordance with the situation of the user at that time.

Furthermore, the notifying unit 142 may also judge whether a notification is given based on not only the orientation of the face or the body of the user but also the positional area of the user. For example, the notifying unit 142 may also judge that a notification to the user is not needed in a period of time for which both of the home electrical appliance 10 and the user are within the angle of view of a camera (i.e., a case in which the home electrical appliance 10 and the user are included in the same image). At this time, the notifying unit 142 may also provide a predetermined buffer time, for example, within a predetermined period of time (for example, for a several seconds) after a frame out of the user, for which a notification to the user is not needed. Furthermore, if a predetermined time has elapsed after the user is out of a frame (frame out), the notifying unit 142 may also judge that a notification to the user is not needed.

Furthermore, even if both of the home electrical appliance 10 and the user are in the same frame, if the distance between the user and the home electrical appliance 10 exceeds a predetermined distance due to a reason that the camera is a wide-angle camera, the notifying unit 142 may also judge that a notification is given to the user even if the user and the home electrical appliance 10 are within a field of view of the camera.

Furthermore, if the notifying unit 142 judges that, based on a face recognition process performed on the user, a state in which the user closes the eyes is longer than the predetermined period of time (i.e., it is judged that the user is in a sleeping state), the notifying unit 142 may also judges that a notification is not needed. Furthermore, even if the information processing apparatus 100A does not have a camera, the notifying unit 142 may also simply implement the process as that described above by performing speaker recognition by voice, a status judgement process of a speaking person, or the like.

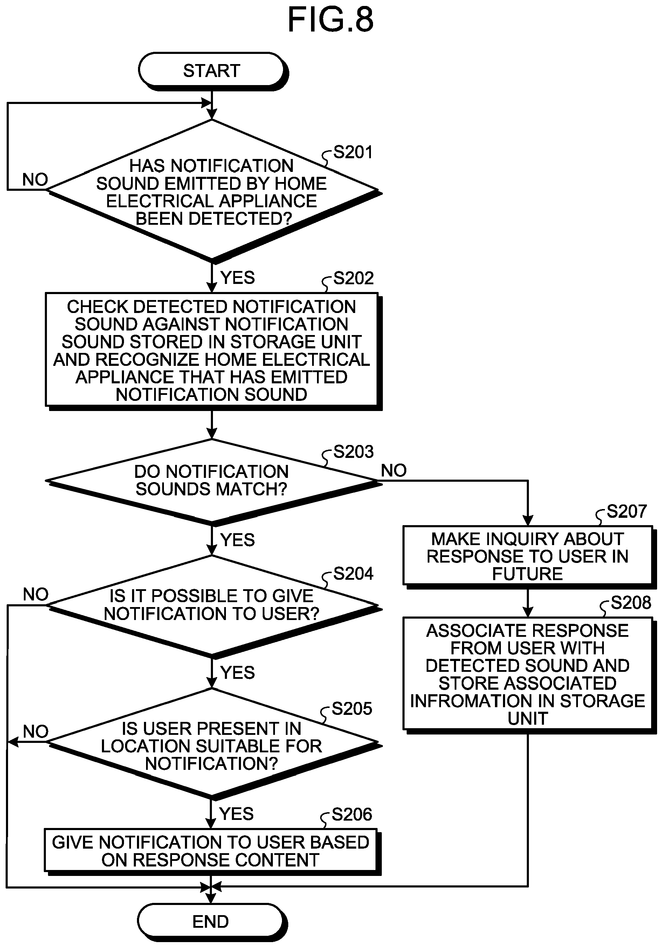

### [2-3. Procedure of information processing according to second embodiment] In the following, the procedure of the information processing according to the second embodiment will be described with reference to FIG. 8. FIG. 8 is a flowchart illustrating the flow of a process according to the second embodiment.

As illustrated in FIG. 8, the information processing apparatus 100A judges whether a notification sound emitted by the home electrical appliance 10 has been detected (Step S201). If the notification sound is not detected (No at Step S201), the information processing apparatus 100A waits until the notification sound is detected.

In contrast, if the notification sound has been detected (Yes at Step S201), the information processing apparatus 100A checks the notification sound against the notification sound stored in the storage unit 130, recognizes the home electrical appliance 10 that has emitted the notification sound, and acquires the information related to the home electrical appliance 10 (Step S202).

Then, the information processing apparatus 100A judges whether the detected notification sound matches the notification sound stored in the storage unit 130 (Step S203). If both of the notification sounds match (Yes at Step S203), the information processing apparatus 100A judges whether the subject notification sound is set so as to be able to be notified to the user (Step S204).

If the notification sound is set so as to be able to be notified to the user (Yes at Step S204), the information processing apparatus 100A further judges whether a user is present in the location that is suitable for notification (Step S205). For example, the information processing apparatus 100A judges whether the user is away from the home electrical appliance 10 by a distance greater than or equal to a predetermined distance.

If the user is present in the location that is suitable for notification (Yes at Step S205), the information processing apparatus 100A notifies, based on the response content stored in the storage unit 130, the user of the operation status of the home electrical appliance 10 (Step S206). In contrast, if the notification sound is not set so as to be able to be notified to the user (No at Step S204) or if the user is not present in the location that is suitable for notification (No at Step S205), the information processing apparatus 100A ends the process without giving a notification to the user.

Furthermore, if the detected notification sound does not match the notification sound stored in the storage unit 130 (No at Step S203), the information processing apparatus 100A makes an inquiry, to the user, about what kind of reaction is needed in the future when the subject notification sound is detected (Step S207).

Then, the information processing apparatus 100A associates the reply from the user with the detected sound (the notification sound detected at Step S201) and stores the associated information in the storage unit 130 (Step S208).

### [2-4. Modification according to second embodiment] Various modifications are possible for the information processing according to the second embodiment. In the following, a modification of the second embodiment will be described.

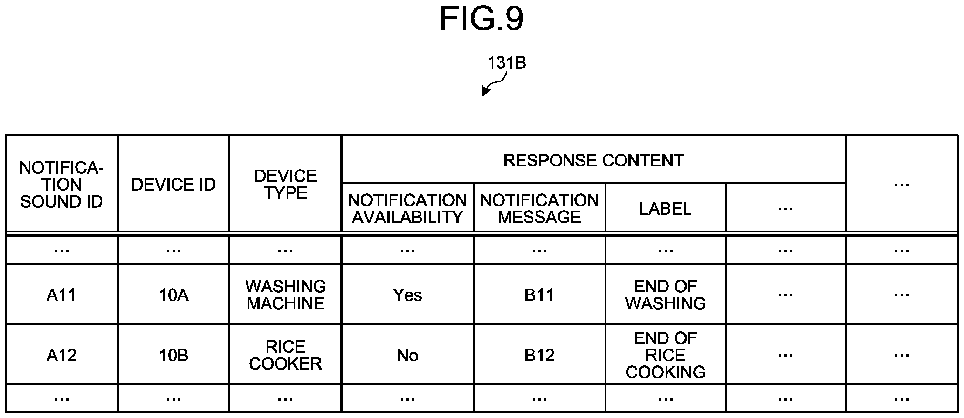

For example, the information processing apparatus 100A may also perform labelling on the detected home electrical appliance 10 or the detected notification sound. This point will be described with reference to FIG. 9. FIG. 9 is an example of a response content table 131B according to the modification of the second embodiment. The response content table 131B has an item of "label" in addition to the information indicated in the response content table 131 and the device information table 132.

The "label" stores therein, after the notification sound is notified to the user or after the inquiry about handling of the notification sound is made to the user, information or the like instructed by the user. Namely, in FIG. 9, as an example of the information registered in the response content table 131B, it is indicated that the notification sound with the notification sound ID of "A11" is the notification sound emitted by the home electrical appliance 10A that is identified by the device ID of "10A" and it is indicated that the device type of the home electrical appliance 10A is a "washing machine". Furthermore, it is indicated that, regarding the notification sound with the notification sound ID of "A11", the notification availability is "Yes", a notification message is "B11", and the label of the notification sound is "the end of washing".

For example, if the information processing apparatus 100A detects that the home electrical appliance 10A emits a notification sound, the information processing apparatus 100A makes an inquiry about the label of the notification sound to the user together with the result of the recognition of the home electrical appliance 10A. Specifically, when the information processing apparatus 100A makes an inquiry, such as "the following sound is output from the home electrical appliance 10A. Shall I notify you of this sound from now on?", if the user gives a reply, such as "let me know of "the end of washing"", the information processing apparatus 100A associates the notification sound with the label that is in accordance with the reply.

After that, if the information processing apparatus 100A detects the same notification sound, the information processing apparatus 100A refers to the response content table 131B and recognizes that a label indicating "the end of washing" is attached to the notification sound. Then, if the information processing apparatus 100A detects a notification sound, the information processing apparatus 100A outputs, to the user, a notification message, such as "washing has been finished", that is in accordance with the label. At this time, the information processing apparatus 100A may also output a notification sound together with the message or may also omit an output of the notification sound itself.

In this way, when the information processing apparatus 100A notifies the user of the operation status of the device, the information processing apparatus 100A notifies the user of, together with the operation status of the device, the information in which labelling is performed on the sensing information in advance. Namely, the information processing apparatus 100A is able to not only recognize the home electrical appliance 10A or the home electrical appliance 10B that emits the notification sound but also attach the label to the notification sound emitted by the home electrical appliance 10A or the home electrical appliance 10B. Consequently, the user is able to receive a notification converted to information that is easily recognizable by the labelling as compared with a case in which only the notification sound is simply notified.

### (3. Third Embodiment)

In the following, a third embodiment will be described.

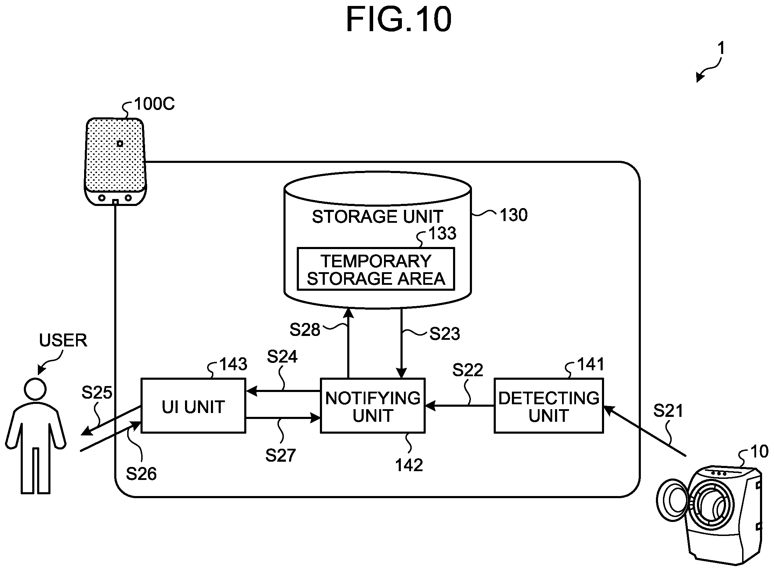

FIG. 10 is a diagram illustrating an example of information processing according to the third embodiment. The information processing according to the third embodiment is performed by an information processing apparatus 100C illustrated in FIG. 10. As illustrated in FIG. 10, in the third embodiment, the information processing apparatus 100C includes a temporary storage area 133 in the storage unit 130. In the following, the flow of the information processing according to the third embodiment will be described with reference to FIG. 10. Furthermore, descriptions of the processes described in the first embodiment or the second embodiment will be omitted.

The information processing apparatus 100C detects a notification sound emitted by the home electrical appliance 10 (Step S21). The information processing apparatus 100C sends the detected notification sound to the notifying unit 142 (Step S22). The information processing apparatus 100C refers to the storage unit 130 (Step S23), and sends the content to be notified in accordance with the content stored in the storage unit 130 to the UI unit 143 (Step S24). At this time, it is assumed that the information processing apparatus 100C stores, in the temporary storage area 133 in the storage unit 130, the notification sound detected at Step S21.

In the example illustrated in FIG. 10, it is assumed that the notification sound detected at Step S21 is the notification sound that is not notified to the user ("notification availability" is "No"). In this case, the information processing apparatus 100C displays nothing without notifying the user of the content of the notification sound (Step S25).

Here, it is assumed that the user hears the notification sound emitted by the home electrical appliance 10 and desires to request the information processing apparatus 100C to receive a notification. In this case, the user expresses a request, such as "from now on, let me know the sound emitted a little while ago", to the information processing apparatus 100C (Step S26).

The information processing apparatus 100C sends the request to the notifying unit 142 (Step S27). The information processing apparatus 100C accesses the storage unit 130, refers to the notification sound stored in the temporary storage area 133, and updates the response content that is associated with the subject notification sound. Specifically, the information processing apparatus 100C updates the setting in which the notification availability is "No" to "Yes".

In this way, the information processing apparatus 100C according to the third embodiment stores the notification sound in the temporary storage area 133 and waits for an instruction from the user in a certain period of time (for example, within one minute). Then, if an instruction is received from the user, the information processing apparatus 100C updates the response content of the notification sound stored in the temporary storage area 133 in accordance with the instruction received from the user. Consequently, the information processing apparatus 100C is able to perform flexible learning of various requests received from the user.

### (4. Other embodiments)

The processes according to each of the embodiments described above may also be performed with various embodiments other than the embodiments described above.

### [4-1. Detection of abnormal sound]

For example, the information processing apparatus 100 may also detect not only the notification sound emitted by the home electrical appliance 10 but also information related to various notifications. As an example, if the information processing apparatus 100 detects an abnormal sound that indicates, as the sensing information, that the operation status of the home electrical appliance 10 is abnormal, the information processing apparatus 100 may also notify the user of, together with the operation status of the home electrical appliance 10, information indicating that the information processing apparatus 100 detects an abnormal sound. The abnormal sound mentioned here is, for example, a sound having a sound pressure at a level that exceeds a predetermined threshold relative to a normal operating sound or the like. If an abnormal sound is detected, the information processing apparatus 100 may also notify the user of an alarm, such as "a sound that is not usually heard is output from a washing machine".

Furthermore, the information processing apparatus 100 may also detect, as the sensing information, information other than a sound. For example, the information processing apparatus 100 may also detect at least one of pieces of information, as the sensing information, on light, temperature, humidity, odor, vibration, and carbon dioxide concentration observed around the home electrical appliance 10. For example, the information processing apparatus 100 detects, in accordance with the various sensors 120, light, temperature, or the like emitted by the home electrical appliance 10 and gives a notification to the user based on the detected information. For example, the information processing apparatus 100 gives a notification to the user based on the information detected by an odor sensor, an image sensor, an optical sensor, a tactile sensor, a vibration sensor, a temperature sensor, a humidity sensor, a carbon dioxide concentration sensor, or the like.

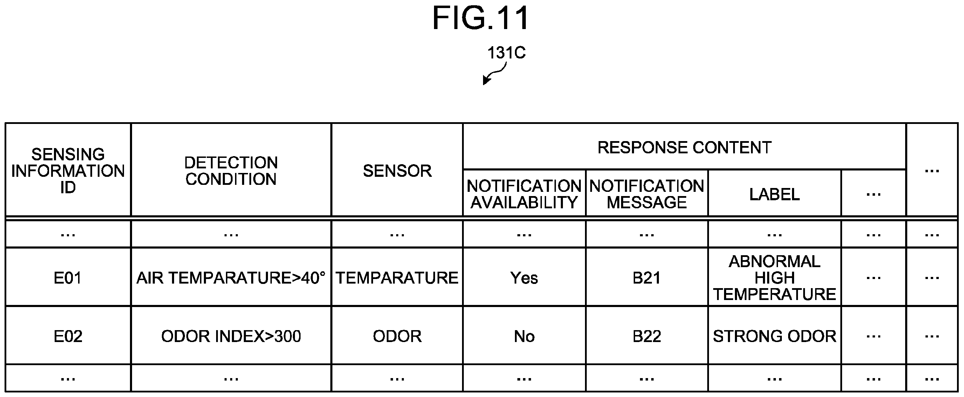

Furthermore, the information processing apparatus 100 may also refer to a data table obtained by defining whether the operation status of the home electrical appliance 10 indicates an abnormal state, and then, notify the user that an abnormal state has been detected. This point will be described with reference to FIG. 11. FIG. 11 is a diagram illustrating an example of a response content table 131C according to another embodiment.

The response content table 131C has items, such as "detection condition" and the like, as compared with the first to the third embodiments. The "detection condition" indicates the condition in which the information detected by the sensor 120 is detected as the sensing information.

For example, the example illustrated in FIG. 11 indicates, as the detection condition, "in a case in which temperature (of a certain kind of the home electrical appliance 10) exceeds 40°", "in a case in which an odor index (emitted from a certain kind of the home electrical appliance 10) exceeds 300", or the like, that the subject information is detected as the sensing information.

The information processing apparatus 100 refers to the response content table 131C and notifies, when detecting the sensing information, the user of the content of the sensing information together with the label. For example, the information processing apparatus 100 notifies the user of a notification message, such as "temperature of the home electrical appliance 10 is abnormally high, so please check it", together with the temperature detected around the home electrical appliance 10. Consequently, the information processing apparatus 100 is able to appropriately notify the user of an abnormal operation status of the home electrical appliance 10.

Furthermore, the detection condition for judging an abnormal state may also be installed in the information processing apparatus 100 at the time of initial shipment, may also be updated by receiving an input from the user, or may also be updated by an external server or the like that is provided by a manufacturer of the home electrical appliance 10.

### [4-2. Notification in accordance with user attribute]

Furthermore, the information processing apparatus 100 may also identify the user and give a notification in accordance with the user. Namely, the information processing apparatus 100 may also detect an attribute of the user who is present in the vicinity of the information processing apparatus 100 and judge, in accordance with the detected attribute of the user, whether to notify the user of the operation status of the device.

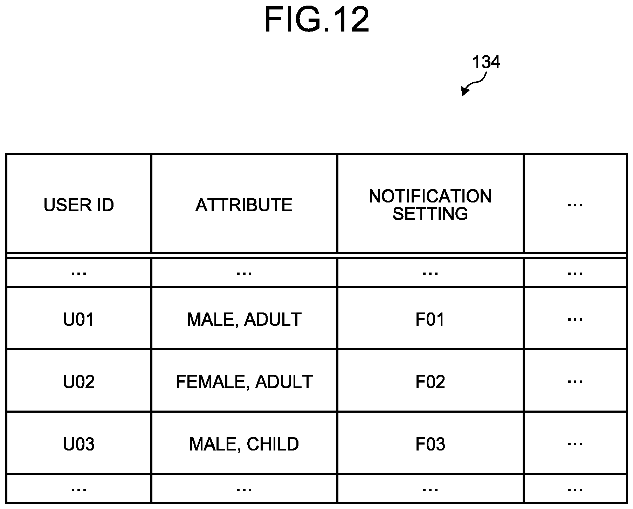

In this case, the information processing apparatus 100 includes, for example, a user information table 134 illustrated in FIG. 12. The user information table 134 stores therein information related to the user who uses the information processing apparatus 100. FIG. 12 is a diagram illustrating an example of the user information table 134 according to the other embodiments.

In the example illustrated in FIG. 12, the user information table 134 has items, such as "user ID", "attribute", "notification setting", and the like.

The "user ID" indicates identification information for identifying a user. The "attribute" indicates various kinds of information on the user registered by the user when the information processing apparatus 100 is used. For example, the attribute includes attribute information (user profile) includes an age, gender, a dwelling place, a family structure, and the like of the user. Furthermore, the attribute is not limited to the information registered by the user and may also include information that is automatically recognized by the information processing apparatus 100. For example, the attribute may also include information on a child or information on a male or a female that are estimated by image recognition performed by the information processing apparatus 100.

The "notification setting" indicates setting information indicating whether a notification from the information processing apparatus 100 is desired to be received. In the example illustrated in FIG. 12, the item of the notification setting is conceptually illustrated as "F01"; however, in practice, in the item of the notification setting, setting information indicating whether each of the users desires to receive a notification is stored for each notification sound or for each type of the home electrical appliance 10.

Namely, in the example illustrated in FIG. 12, it is indicated that, regarding the user identified by the user ID of "U01", the attribute is "male, adult" and the notification setting is "F01".

When the information processing apparatus 100 detects a notification sound, the information processing apparatus 100 refers to the user information table 134 and checks the notification setting of the user who is present in the vicinity of the information processing apparatus 100. Then, the information processing apparatus 100 judges whether a notification is given to the subject user in accordance with the notification setting that is generated for each user. Consequently, the information processing apparatus 100 is able to give a notification in accordance with each of the users.

Furthermore, the information processing apparatus 100 may also use various known technologies as a method for detecting a user who is present in the vicinity of the information processing apparatus 100. For example, the information processing apparatus 100 detects, based on the information emitted by a living body, a user who is located in the vicinity of the information processing apparatus 100 by using a biological sensor that is a sensor that detects whether a living body is located. Specifically, the biological sensor is an infrared sensor (thermography) that detects temperature of a living body (body temperature), an image sensor (camera) that is used to perform image recognition on a living body, or the like. Furthermore, the information processing apparatus 100 may also use a distance measurement sensor or the like that measures a distance to the user. The distance measurement sensor is a distance sensor, which measures a distance to a living body by irradiating light, an ultrasonic sensor, or the like. Furthermore, for the distance measurement sensor, for example, a technology of light detection and ranging, or laser imaging, detection, and ranging (LiDAR) or the like may also be used. Furthermore, in order to measure a distance between the information processing apparatus 100 and the user, for example, a technology, such as simultaneous localization and mapping (SLAM), provided in the information processing apparatus 100 may also be used.

### [4-3. Notification in accordance with usage status of device]

Furthermore, the information processing apparatus 100 may also acquire a usage status of the information processing apparatus 100 that outputs a notification, and then, may also output a notification in accordance with the acquired usage status. For example, the information processing apparatus 100 may also control a display of a notification on the display unit, such as a display. Specifically, the information processing apparatus 100 may also control a notification according to a voice that is reproduced by the information processing apparatus 100 that gives a notification or according to a displayed image.

For example, it is conceivable that, as the information processing apparatus 100, a smart speaker that is present in the vicinity of the home electrical appliance 10 and a television by which a broadcast program is viewed by the user are placed. If the smart speaker that is placed in the vicinity of the home electrical appliance 10 detects a notification sound that is output from the home electrical appliance 10, the information processing apparatus 100 does not display a notification in a period of time for which the broadcast program is displayed on a display of the television, and then, outputs the notification when the broadcast program is switched to a commercial program. Furthermore, it may also be possible to perform control such that a notification is displayed at a position that does not block the view of the displayed content. In addition, for example, if the information processing apparatus 100 that outputs a notification is a smartphone and if it is determined to be obstructive if a large notification image is displayed on a screen, it may also be possible to perform a process of displaying a notification by using an icon. The process of acquiring these usage statuses may also be performed based on the information related to an application running on the information processing apparatus 100 or may also be performed based on image analysis performed on the content that is displayed on the screen.

These examples described above are only an example and do not exclude different embodiments that can be conceivable based on the present invention including an example in which the information processing apparatus 100 that outputs a voice notification is a different type of the information processing apparatus 100, such as a smart speaker that reproduces voice content, or an example of a different combination in which the information processing apparatus 100 that outputs a notification is a smartphone that reproduces a broadcast program. Furthermore, the embodiment may also be performed in a case in which the information processing apparatus 100 that detects a notification sound of the home electrical appliance 10 and the information processing apparatus 100 that outputs a notification are the same.

### [4-4. Configuration of each device]

In each of the embodiments described above, a description has been given of an example in which the information processing apparatus 100 is what is called a smart speaker, a smartphone, a television, or a tablet terminal and a process is performed in a stand-alone manner. However, the information processing apparatus 100 may also perform information processing according to the present disclosure in cooperation with a server device (what is called a cloud server, etc.) that is connected by a network. Furthermore, for example, the information processing apparatus 100 may also be implemented in cooperation with a smart speaker and a smartphone. In this case, for example, it is possible to perform information processing such that a smartphone held at hand by a user performs notification based on the notification sound detected by the smart speaker. In addition, it is possible to perform information processing, such that, based on a notification sound emitted by a microwave oven detected by a refrigerator that has an agent function, the television that is viewed by the user gives a notification by voice or by displaying on a screen.

Furthermore, the information processing apparatus 100 according to the present disclosure may also be implemented by a mode, such as an IC chip, mounted on a smartphone or the like.

### [4-5. Mode of information processing system]

Furthermore, the information processing system 1 according to the present disclosure may include various modifications. For example, if the information processing apparatus 100 is an IoT device or the like, the information processing according to the present disclosure may also be implemented by a client (IoT device) and an external server (cloud server) or the like in cooperation with each other. In the following, a conceivable example as a mode of the information processing system 1 will be enumerated. Furthermore, in the examples described below, an example in which each of the devices includes an input unit, a processing unit, and an output unit will be described. The input unit and the output unit correspond to, for example, the communication unit 122 illustrated in FIG. 2. Furthermore, the processing unit corresponds to, for example, the control unit 140 illustrated in FIG. 2. Furthermore, in the modifications described below, a modification of the information processing system is referred to as a "system 2". Furthermore, a modification of the information processing apparatus 100 is referred to as an "information processing apparatus 11", an "information processing apparatus 12", or an "information processing apparatus 13". Furthermore, a modification of the information processing apparatus 11 or the like is referred to as an "information processing apparatus 11a", an "information processing apparatus 11b", an "information processing apparatus 11c", or the like.

### (First example)

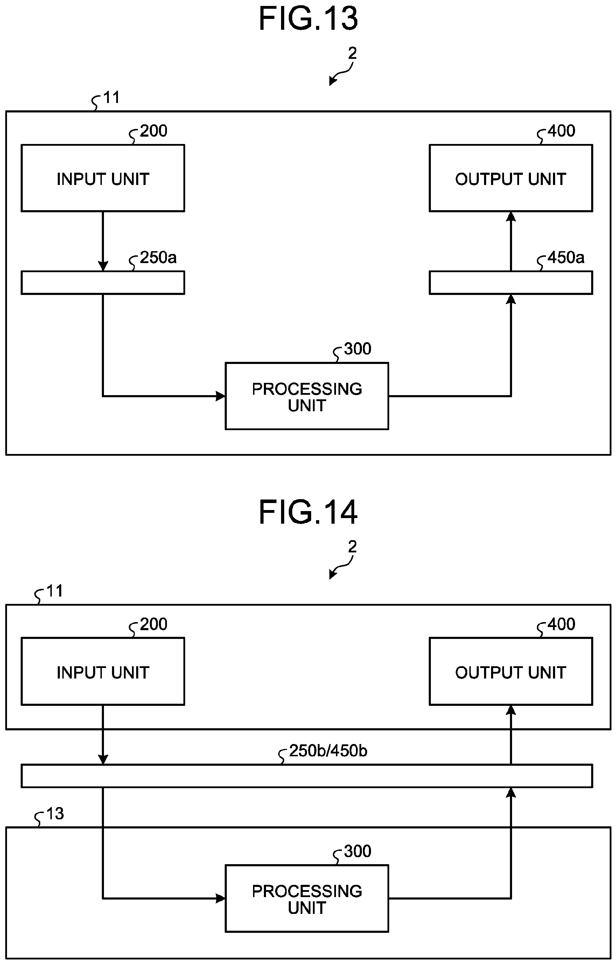

FIG. 13 is a block diagram illustrating a first example of the system configuration according to an embodiment of the present disclosure. With reference to FIG. 13, the system 2 includes the information processing apparatus 11. All of an input unit 200, a processing unit 300, and an output unit 400 are implemented in the information processing apparatus 11. The information processing apparatus 11 may be a terminal device or a server as described below. In the first example, the information processing apparatus 11 may also be a stand-alone device that does not communicate with an external device via a network in order to implement the function according to the embodiment of the present disclosure. Furthermore, the information processing apparatus 11 may also communicate with the external device for another function, and thus, is not always have to be a stand-alone device. Each of an interface 250a between the input unit 200 and the processing unit 300 and an interface 450a between the processing unit 300 and the output unit 400 may be an interface included in the device.

In the first example, the information processing apparatus 11 may be, for example, a terminal device. In this case, the input unit 200 may include an input device, a sensor, and software that acquires information from an external service. The software that acquires the information from the external service acquires data from, for example, application software of the service that is executed by the terminal device. The processing unit 300 is implemented by a processor or a processing circuit provided in the terminal device operating in accordance with a program stored in a memory or a storage device. The output unit 400 may include an output device, a control device, and software that provides information to the external service. The software that provides information to the external service may provide information to application software of a service that is executed in, for example, the terminal device.

Alternatively, in the first example, the information processing apparatus 11 may also be a server. In this case, the input unit 200 may include software that acquires information from the external service. The software that acquires information from the external service acquires data from, for example, a server (may also be the information processing apparatus 11 itself) of the external service. The processing unit 300 is implemented by the processor included in the terminal device operating in accordance with the program stored in a memory or a storage device. The output unit 400 may include software that provides information to the external service. The software that provides the information to the external service provides the information to, for example, the server (may also be the information processing apparatus 11 itself) of the external service.

### (Second example)

FIG. 14 is a block diagram illustrating a second example of the system configuration according to an embodiment of the present disclosure. With reference to FIG. 14, the system 2 includes the information processing apparatuses 11 and 13. The input unit 200 and the output unit 400 are implemented in the information processing apparatus 11. In contrast, the processing unit 300 is implemented in the information processing apparatus 13.

The information processing apparatus 11 and the information processing apparatus 13 communicate via a network in order to implement the function according to the embodiment of the present disclosure. Both of an interface 250b between the input unit 200 and the processing unit 300 and an interface 450b between the processing unit 300 and the output unit 400 may be a communication interface between the devices.

In the second example, the information processing apparatus 11 may be, for example, a terminal device. In this case, similarly to the first example described above, the input unit 200 may include software that acquires information from an input device, a sensor, and an external service. Similarly to the first example described above, the output unit 400 may also include software that provides information to an output device, a control device, an external service. Alternatively, the information processing apparatus 11 may also be a server that sends and receives information to and from the external service. In this case, the input unit 200 may include software that acquires information from the external service. Furthermore, the output unit 400 may include software that provides information to the external service.

Furthermore, in the second example, the information processing apparatus 13 may be a server or a terminal device. The processing unit 300 is implemented by a processor or a processing circuit included in the information processing apparatus 13 operating in accordance with the program stored in the memory of the storage device. The information processing apparatus 13 may also be a dedicated device as, for example, a server. In this case, the information processing apparatus 13 may also be installed in a data center or installed in a home. Alternatively, the information processing apparatus 13 is able to be used as a terminal device regarding another function; however, regarding the function according to the embodiment of the present disclosure, the information processing apparatus 13 may also be a device that does not implement the input unit 200 and the output unit 400. In the example described below, the information processing apparatus 13 may also be a server or may also be a terminal device in the above described sense.

As an example, considering a case in which the information processing apparatus 11 is a wearable device and the information processing apparatus 13 is a mobile device connected to the wearable device by Bluetooth (registered trademark) or the like. In a case in which the wearable device receives an input operated by the user (the input unit 200), a mobile device performs a process based on a request that is sent based on the operation input (the processing unit 300), and the result of the process is output from the wearable device (the output unit 400), it can be said that the wearable device functions as the information processing apparatus 11 in the second example described above and the mobile device functions as the information processing apparatus 13.

### (Third example)

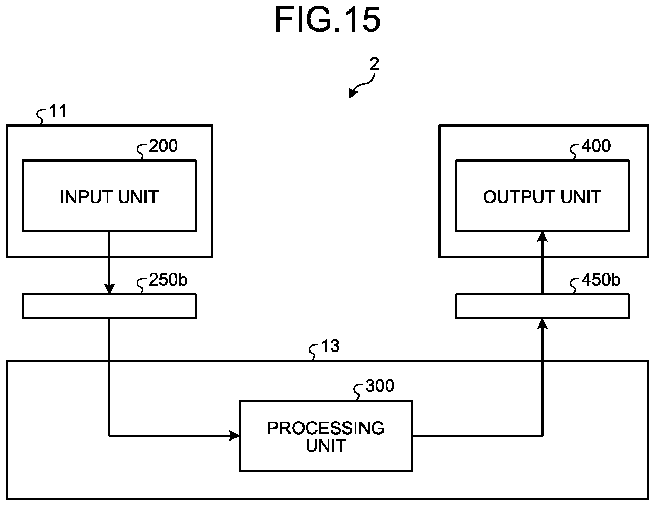

FIG. 15 is a block diagram illustrating a third example of the system configuration according to an embodiment of the present disclosure. With reference to FIG. 15, the system 2 includes the information processing apparatuses 11a, 11b, and 13. The input unit 200 is implemented in the information processing apparatus 11a. The output unit 400 is implemented in the information processing apparatus 11b. Furthermore, the processing unit 300 is implemented in the information processing apparatus 13. The information processing apparatuses 11a and 11b and the information processing apparatus 13 communicate via a network in order to implement the functions according to the embodiment of the present disclosure. Each of the interface 250b between the input unit 200 and the processing unit 300 and the interface 450b between the processing unit 300 and the output unit 400 may be a communication interface between the devices. However, in the third example, because the information processing apparatus 11a and the information processing apparatus 11b are separate devices, each of the interfaces 250b and 450b may include a different type of interface.

In the third example, the information processing apparatuses 11a and 11b may be, for example, a terminal device. In this case, similarly to the first example described above, the input unit 200 may include software that acquires information from an input device, a sensor, and an external service. Similarly to the first example described above, also, the output unit 400 may include software or the like that provides information to an output device, the control device, and the external service. Alternatively, one of or both of the information processing apparatuses 11a and 11b may also be a server for acquiring information from the external service and for providing information to the external service. In this case, the input unit 200 may include software that acquires information from the external service. Furthermore, the output unit 400 may include software that provides information to the external service.

Furthermore, in the third example, similarly to the second example described above, the information processing apparatus 13 may be a server or a terminal device. The processing unit 300 is implemented by the processor or the processing circuit included in the information processing apparatus 13 operating in accordance with the program stored in the memory or the storage device.

In the third example described above, the information processing apparatus 11a that implements the input unit 200 and the information processing apparatus 11b that implements the output unit 400 are separate devices. Therefore, for example, it is possible to implement a function for outputting a result of a process based on an input acquired by the information processing apparatus 11a that is a terminal device held or used by a first user from the information processing apparatus 11b that is a terminal device held or used by a second user who is different from the first user. Furthermore, it is also possible to implement a function for outputting, for example, a result of a process based on an input acquired by the information processing apparatus 11a that is the terminal device held or used by the first user from the information processing apparatus 11b that is the terminal device that is not held by the first user at hand at that time (for example, installed in the home of the user who is away from home). Alternatively, each of the information processing apparatus 11a and the information processing apparatus 11b may also be a terminal device that is held or used by a same user. For example, if the information processing apparatuses 11a and 11b are wearable devices worn by a user at different parts of the body or are a combination of a wearable device and a mobile device, it is possible to provide, to the user, a function of these devices in cooperation with each other.

### (Fourth example)

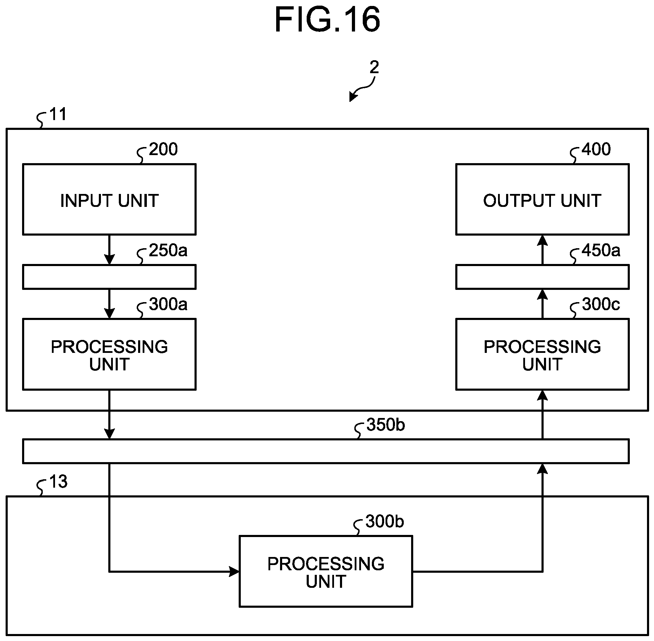

FIG. 16 is a block diagram illustrating a fourth example of the system configuration according to an embodiment of the present disclosure. With reference to FIG. 16, the system 2 includes the information processing apparatuses 11 and 13. In the fourth example, the input unit 200 and the output unit 400 are implemented in the information processing apparatus 11. In contrast, the processing units 300 are implemented by the information processing apparatus 11 and the information processing apparatus 13 in a separated manner. The information processing apparatus 11 communicates with the information processing apparatus 13 via a network in order to implement the function according to the embodiment of the present disclosure.

As described above, in the fourth example, the processing unit 300 is implemented between the information processing apparatus 11 and the information processing apparatus 13 in a separated manner. More specifically, the processing unit 300 includes processing units 300a and 300c that are implemented in the information processing apparatus 11 and includes a processing unit 300b that is implemented in the information processing apparatus 13. The processing unit 300a performs a process based on the information provided from the input unit 200 via the interface 250a, and then, provides the result of the process to the processing unit 300b. In this sense, it can be said that the processing unit 300a performs pre-processing. In contrast, the processing unit 300c performs a process based on the information provided from the processing unit 300b, and then, provides the result of the process to the output unit 400 via the interface 450a. In this sense, it can be said that the processing unit 300c performs post-processing.

Furthermore, in the example illustrated in the drawing, both of the processing unit 300a that performs pre-processing and the processing unit 300c that performs post-processing are illustrated; however, in practice, only one of the processing units may also be present. In other words, the information processing apparatus 11 may also implement the processing unit 300a that performs the pre-processing without implementing the processing unit 300c that performs the post-processing, and the information provided from the processing unit 300b may also be provided to the output unit 400 without being processed anything. Similarly, the information processing apparatus 11 may also implement the processing unit 300c that performs the post-processing but does not need to implement the processing unit 300a that performs the pre-processing.

An interface 350b is present between the processing unit 300a and the processing unit 300b and between the processing unit 300b and the processing unit 300c. The interface 350b is a communication interface between the devices. In contrast, if the information processing apparatus 11 implements the processing unit 300a, the interface 250a is an interface included in the device. Similarly, if the information processing apparatus 11 implements the processing unit 300c, the interface 450a is an interface included in the device.

Furthermore, the fourth example described above is the same as the second example described above except that one of or both of the processing unit 300a and the processing unit 300c is or are implemented by the processor or the processing circuit included in the information processing apparatus 11. In other words, the information processing apparatus 11 may be a server that sends or receives information to or from a terminal device or an external service. Furthermore, the information processing apparatus 13 may be the server or the terminal device.

### (Fifth example)

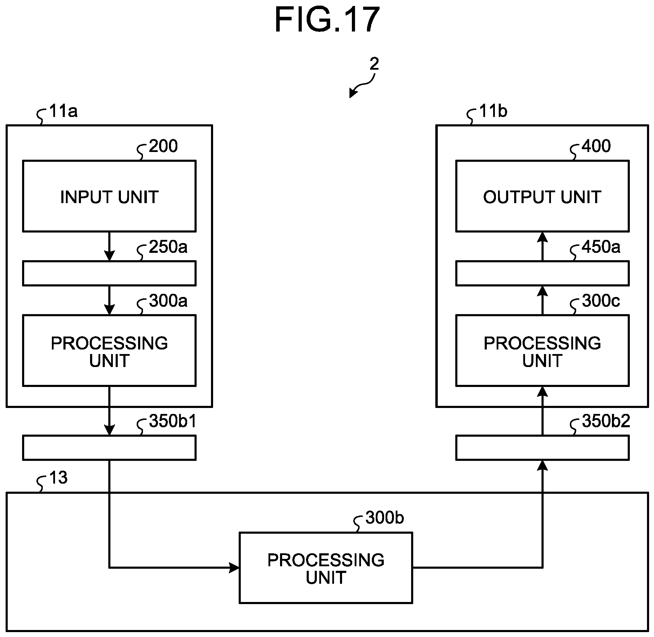

FIG. 17 is a block diagram illustrating a fifth example of the system configuration according to the embodiment of the present disclosure. With reference to FIG. 17, the system 2 includes the information processing apparatuses 11a, 11b, and 13. The input unit 200 is implemented in the information processing apparatus 11a. The output unit 400 is implemented in the information processing apparatus 11b. Furthermore, the processing units 300 are implemented in the information processing apparatuses 11a and 11b and the information processing apparatus 13 in a separated manner. The information processing apparatuses 11a and 11b and the information processing apparatus 13 performs communication via a network in order to implement the function according to the embodiment of the present disclosure.

As illustrated in the drawing, in the fifth example, the processing units 300 are implemented between the information processing apparatuses 11a and 11b and the information processing apparatus 13 in a separated manner. More specifically, the processing unit 300 includes the processing unit 300a implemented in the information processing apparatus 11a, the processing unit 300b implemented in the information processing apparatus 13, and the processing unit 300c implemented in the information processing apparatus 11b. The processing unit 300 configured in the separated manner is the same as that of the fourth example described above. However, in the fifth example, because the information processing apparatus 11a and the information processing apparatus 11b are separate device, each of the interfaces 350b1 and 350b2 may include a different type of interface.

Furthermore, the fifth example is the same as the third example described above except that one of or both of the processing unit 300a and processing unit 300c is or are implemented by the processor or the processing circuit included in the information processing apparatus 11a or the information processing apparatus 11b. In other words, the information processing apparatuses 11a and 11b may be a server for sending and receiving information to and from a terminal device or an external service. Furthermore, the information processing apparatus 13 may be a server or a terminal device. Furthermore, in a description below, a description of the processing unit in the terminal or the server each having the input unit and the output unit will be omitted; however, in any of examples, one of or all of the devices may include a processing unit.

### (Example of client-server system)

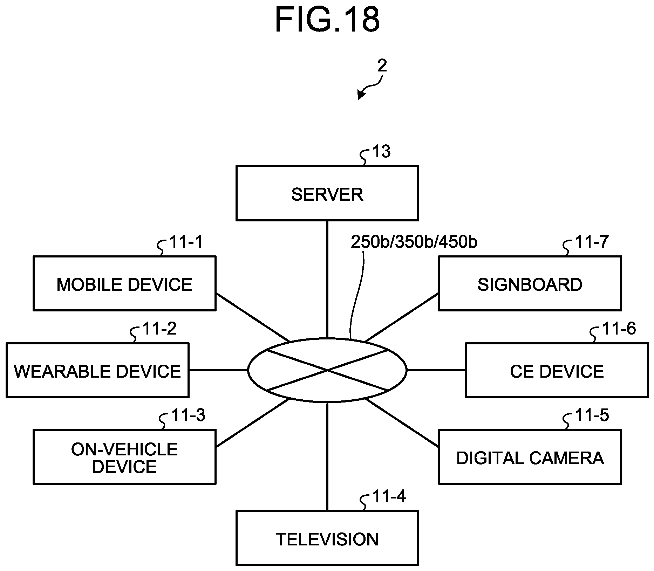

FIG. 18 is a diagram illustrating a client-server system as a more specific example of the system configuration according to the embodiment of the present disclosure. In the example illustrated in the drawing, the information processing apparatus 11 (or the information processing apparatus 11a or 11b) is a terminal device, whereas the information processing apparatus 13 is a server.

As illustrated in the drawing, the terminal device includes, for example, a mobile device 11-1, such as a smartphone, a tablet, or a notebook personal computer (PC); a wearable device 11-2, such as an eye-wear type or contact lens type terminal, a wristwatch type terminal, a bracelet type terminal, a ring type terminal, a headset, a clothes mounting type or clothes integrated type terminal, a shoes mounting type or shoes integrated type terminal, or necklace type terminal; an on-vehicle device 11-3, such as a car navigation system or a rear seat entertainment system; a television 11-4; a digital camera 11-5; a consumer electronics (CE) device 11-6, such as a recorder, a gaming device, an air conditioner, a refrigerator, a washing machine, or a desktop PC; a robot device; a device including a sensor that is installed together with facilities; and a digital signboard (digital signage) 11-7 that is installed on the street. These information processing apparatuses 11 (terminal devices) communicates with the information processing apparatus 13 (server) via a network. The network between the terminal device and the server corresponds to an interface 150b, the interface 250b, or the interface 350b in the example described above. Furthermore, these devices may also individually operate in liaison with each other or a system in which all of the devices are able to operate in a liaison manner may also be constructed.

Furthermore, the example illustrated in FIG. 18 illustrates in order to easily understand the example in which the system 2 is implemented in the client-server system; therefore, the reason that the system 2 is not limited to such a client-server system is as explained in each of the examples described above. In other words, for example, both of the information processing apparatuses 11 and 13 may also be terminal devices, whereas both of the information processing apparatuses 11 and 13 may also be servers. If the information processing apparatus 11 includes the information processing apparatuses 11a and 11b, one of the information processing apparatuses 11a and 11b may be a terminal device and the other one thereof may be a server. Furthermore, if the information processing apparatus 11 is a terminal device, an example of the terminal device is not limited to the terminal devices 11-1 to 11-7 and a different type of terminal device may also be included.

### (Example of distributed system)

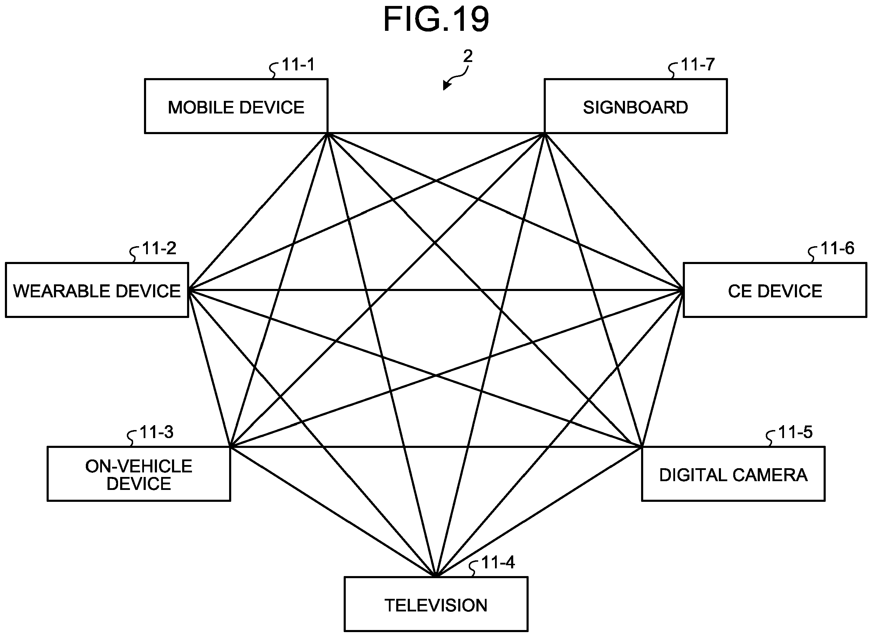

Another configuration example of the system 2 will be described with reference to FIG. 19. FIG. 19 is a diagram illustrating a distributed system as another specific example of the system configuration according to the embodiment of the present disclosure. In the example illustrated in, the information processing apparatuses 11 (or, the information processing apparatuses 11a or 11b) are nodes and the information processing apparatuses 11 are connected each other via a network.

In the distributed system illustrated in FIG. 19, it is possible to operate in cooperation with each other between the devices, perform distribution management on data, and distribute processes. Consequently, this makes it possible to reduce a processing load, improve real time performance (improve a response time and a processing speed), and ensure security.

Furthermore, the distributed system is also able to perform machine learning in a distributed cooperative manner and is able to process a large amount of data.

Furthermore, in the distributed system illustrated in FIG. 19, a server used in a centralized system is not needed, and it is possible to mutually monitor data and ensure credibility of the data. Specifically, for example, it is possible to share transaction information (ledger) with all of participants (all of the information processing apparatuses 11) and strictly maintain validity (what is called a blockchain). In the blockchain, it is practically difficult to manipulate all of the ledgers of all of the participants, so that it is more reliably ensure the credibility. Furthermore, in the blockchain, if data included in a past block is to be manipulated, there is a need to recalculate all of hash values included in the subject block and the subsequent blocks, so that a processing load is increased and a process is practically impossible; therefore, it is possible to more reliably ensure the credibility.

Furthermore, in the blockchain, all of the participants share the transaction information (distributed database), and writing to the distributed database is performed based on a specific agreement, so that it is possible to prevent a fraud from being performed by a specific participant and it is thus possible to maintain fairness.

### (Sixth example)

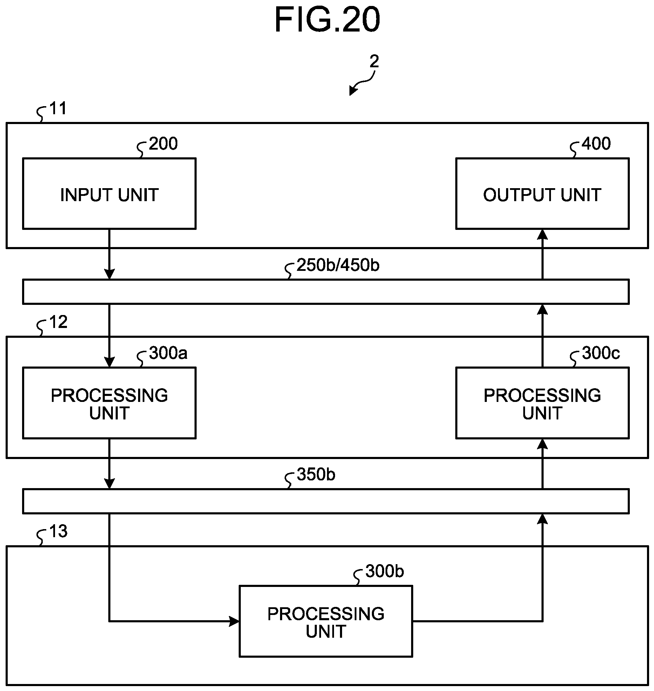

FIG. 20 is a block diagram illustrates a sixth example of the system configuration according to the embodiment of the present disclosure. With reference to FIG. 20, the system 2 includes the information processing apparatuses 11, 12, and 13. The input unit 200 and the output unit 400 are implemented in the information processing apparatus 11. In contrast, the processing units 300 are implemented in the information processing apparatus 12 and the information processing apparatus 13 in a distributed manner. The information processing apparatus 11 and the information processing apparatus 12, and the information processing apparatus 12 and the information processing apparatus 13 communicate with each other via a network in order to implement the function according to the embodiment of the present disclosure.

As described above, in the sixth example, the processing units 300 are implemented between the information processing apparatus 12 and the information processing apparatus 13 in a distributed manner. More specifically, the processing units 300 includes the processing units 300a and 300c that are implemented in the information processing apparatus 12 and the processing unit 300b that is implemented in the information processing apparatus 13. The processing unit 300a performs a process based on the information provided from the input unit 200 via the interface 250b, and then, provides the result of the process to the processing unit 300b via the interface 350b. In contrast, the processing unit 300c performs a process based on the information provided from the processing unit 300b via the interface 350b, and then, provides the result of the process to the output unit 400 via the interface 450b. Furthermore, in the example illustrated in the drawing, both of the processing unit 300a that performs pre-processing and the processing unit 300c that performs post-processing are illustrated; however, in practice, one of the processing units may be present.

In the sixth example, the information processing apparatus 12 is present between the information processing apparatus 11 and the information processing apparatus 13. More specifically, for example, information processing apparatus 12 may be a terminal device or a server that is present between the information processing apparatus 11 that is a terminal device and the information processing apparatus 13 that is a server. An example of a case in which the information processing apparatus 12 is a terminal device includes a case in which the information processing apparatus 11 is a wearable device, the information processing apparatus 12 is a mobile device that is connected to the wearable device via Bluetooth (registered trademark) or the like, and the information processing apparatus 13 is a server that is connected to the mobile device via the Internet. Furthermore, an example of a case in which the information processing apparatus 12 is a server includes a case in which the information processing apparatuses 11 are various terminal devices, the information processing apparatus 12 is an intermediate server that is connected to the terminal devices via a network, and the information processing apparatus 13 is a server that is connected to the intermediate server via the network.

### (Seventh example)

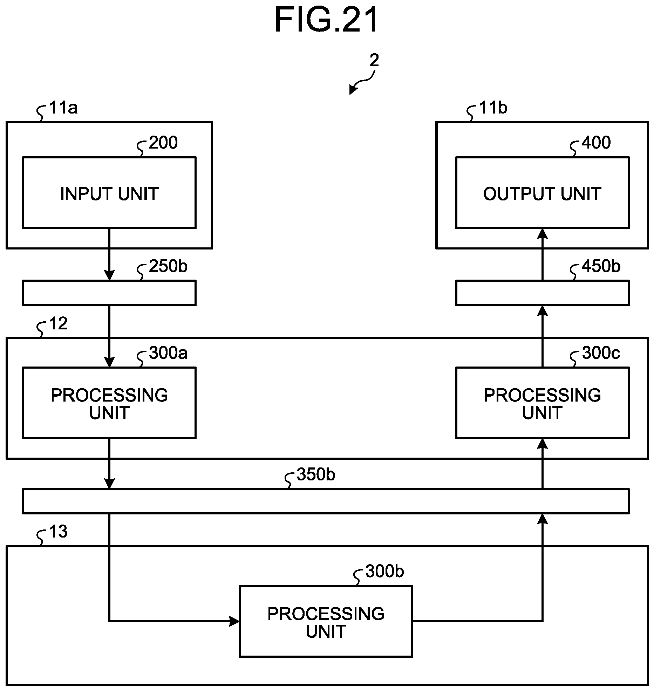

FIG. 21 is a block diagram illustrating a seventh example of the system configuration according to the embodiment of the present disclosure. With reference to FIG. 21, the system 2 includes the information processing apparatuses 11a, 11b, 12, and 13. In the example illustrated in the drawing, the input unit 200 is implemented in the information processing apparatus 11a. The output unit 400 is implemented in the information processing apparatus 11b. In contrast, the processing units 300 are implemented in the information processing apparatus 12 and the information processing apparatus 13 in a distributed manner. The information processing apparatuses 11a and 11b and the information processing apparatus 12, and the information processing apparatus 12 and the information processing apparatus 13 communicate with each other via a network in order to implement the function according to the embodiment of the present disclosure.

The seventh example is an example of a combination of the third example and the sixth example described above. In other words, in the seventh example, the information processing apparatus 11a that implements the input unit 200 and the information processing apparatus 11b that implements the output unit 400 are separate devices. More specifically, the seventh example includes a case in which the information processing apparatuses 11a and 11b are wearable devices that are worn by a user at different parts of the body, the information processing apparatus 12 is a mobile device that is connected to these wearable devices via Bluetooth (registered trademark) or the like, and the information processing apparatus 13 is a server that is connected to the mobile device via the Internet. Furthermore, the seventh example also includes a case in which the information processing apparatuses 11a and 11b are a plurality of terminal devices (that may also be held or used by a same user, or that may also be held or used by different users), the information processing apparatus 12 is an intermediate server that is connected to each of the terminal devices via a network, and the information processing apparatus 13 is a server that is connected to the intermediate server via the network.

### (Eighth example)

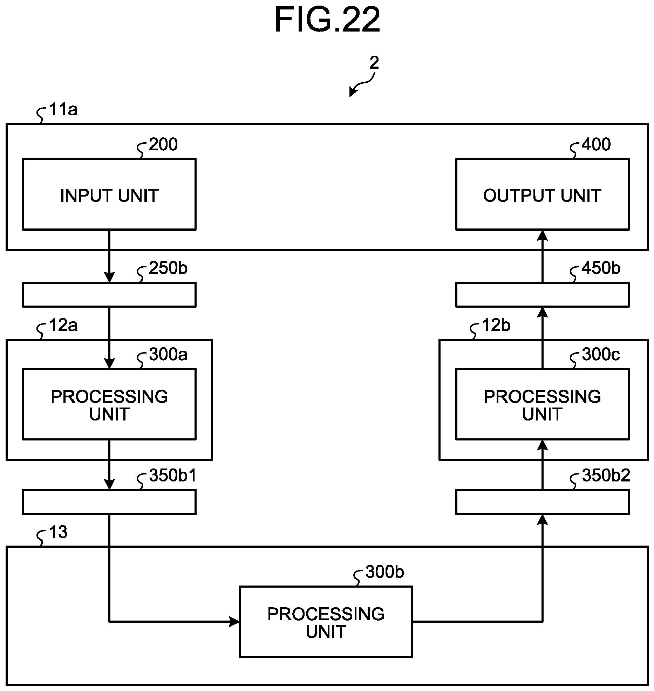

FIG. 22 is a block diagram illustrating an eighth example of the system configuration according to the embodiment of the present disclosure. With reference to FIG. 22, the system 2 includes the information processing apparatuses 11, 12a, 12b, and 13. The input unit 200 and the output unit 400 are implemented in the information processing apparatus 11. In contrast, the processing units 300 are implemented in the information processing apparatuses 12a and 12b and the information processing apparatus 13 in a distributed manner. The information processing apparatus 11 and the information processing apparatuses 12a and 12b, and the information processing apparatuses 12a and 12b and the information processing apparatus 13 communicate with each other via a network in order to implement the function according to the embodiment of the present disclosure.

The eighth example is an example designed to have a configuration in which, in the sixth example described above, the processing unit 300a that performs pre-processing and the processing unit 300c that performs post-processing are implemented by the separate information processing apparatuses 12a and 12b, respectively. Therefore, the information processing apparatus 11 and the information processing apparatus 13 are the same as those described above in the sixth example. Furthermore, the information processing apparatuses 12a and 12b may also be a server or a terminal device, respectively. For example, if both of the information processing apparatuses 12a and 12b are the servers, in the system 2, it can be said that the processing units 300 are implemented in the three servers (the information processing apparatuses 12a, 12b, and 13) in a distributed manner. Furthermore, the number of servers that implements the processing units 300 in a distributed manner is not limited to three and may also be two or may also be four or more. These examples can be understood from, for example, the eighth example described here, or a ninth example that will be described below; therefore, illustrations thereof will be omitted.

### (Ninth example)

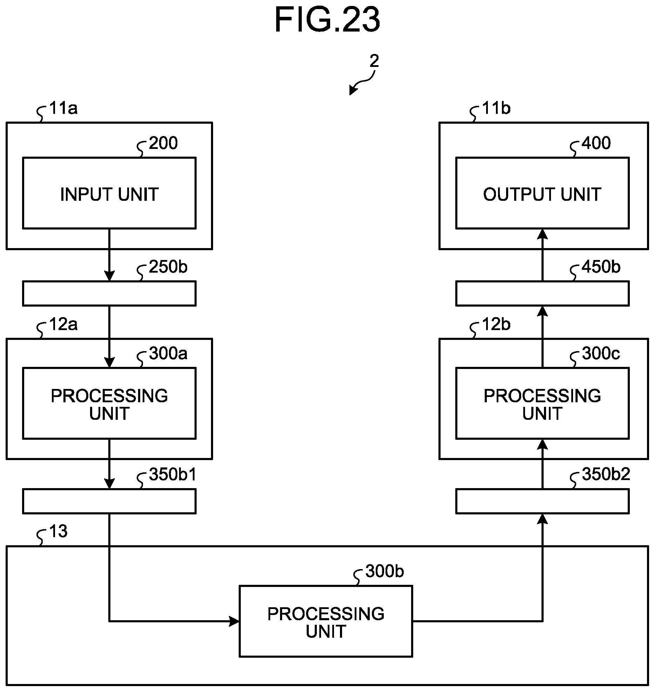

FIG. 23 is a block diagram illustrating a ninth example of the system configuration according to the embodiment of the present disclosure. With reference to FIG. 23, the system 2 includes the information processing apparatuses 11a, 11b, 12a, 12b, and 13. In the ninth example, the input unit 200 is implemented in the information processing apparatus 11a. The output unit 400 is implemented in the information processing apparatus 11b. In contrast, the processing units 300 are implemented in the information processing apparatuses 12a and 12b and the information processing apparatus 13 in a distributed manner. The information processing apparatus 11a and the information processing apparatus 12a, the information processing apparatus 11b and the information processing apparatus 12b, and the information processing apparatuses 12a and 12b and the information processing apparatus 13 communicate via a network in order to implement the function according to the embodiment of the present disclosure.

The ninth example is an example of a combination of the seventh example and the eighth example described above. In other words, in the ninth example, the information processing apparatus 11a that implements the input unit 200 and the information processing apparatus 11b that implements the output unit 400 are separate devices. The information processing apparatuses 11a and 11b communicate with the different intermediate nodes (the information processing apparatuses 12a and 12b), respectively. Therefore, in the ninth example, similarly to the eighth example described above, the processing units 300 are implemented in the three servers (the information processing apparatuses 12a, 12b, and 13) in a distributed manner, and it is possible to implement the function according to the embodiment of the present disclosure by using the information processing apparatuses 11a and 11b that may be terminal devices that are held or used by a same user or that are held or used by different users.

### (Example of system including intermediate server)

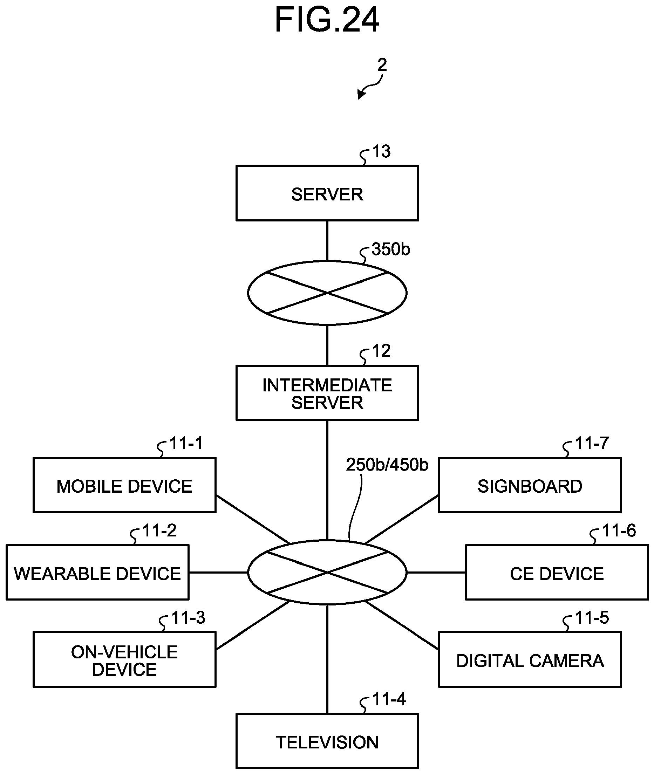

FIG. 24 is a diagram illustrating an example of a system that includes an intermediate server as one of more specific examples of the system configuration according to the embodiment of the present disclosure. In the example illustrated in the drawing, the information processing apparatus 11 (or, the information processing apparatus 11a or 11b) is a terminal device, the information processing apparatus 12 is an intermediate server, and the information processing apparatus 13 is a server.

Similarly to the example described above with reference to FIG. 18, examples of the terminal device may include the mobile device 11-1, the wearable device 11-2, the on-vehicle device 11-3, the television 11-4, the digital camera 11-5, the CE device 11-6, the robot device, and the signboard 11-7. These information processing apparatuses 11 (terminal devices) communicate with the information processing apparatus 12 (intermediate server) via a network. The network between the terminal device and the intermediate server corresponds to the interfaces 250b and 450b, respectively, in the example described above. Furthermore, the information processing apparatus 12 (intermediate server) communicates with the information processing apparatus 13 (server) via the network. The network between the intermediate server and the server corresponds to the interface 350b in the example described above.

Furthermore, the example illustrated in FIG. 24 is illustrated so that an example in which the system 2 is implemented in a system that includes the intermediate server can easily be understood, and the reason that the system 2 is not limited to this type of system is as explained in each of the examples described above.

### (Example of system that includes terminal device functioning as host)

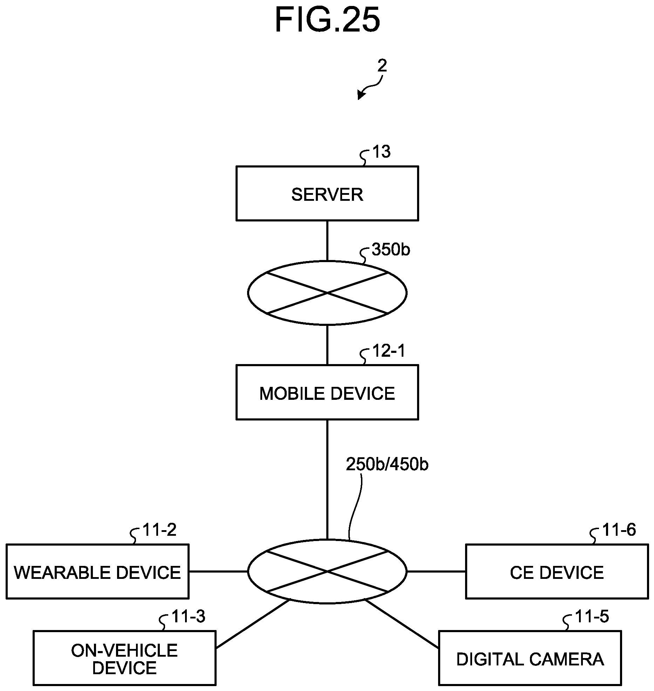

FIG. 25 is a diagram illustrating an example of a system that includes a terminal device functioning as a host as one of more specific examples of the system configuration according to the embodiment of the present disclosure. In the example illustrated in the drawing, the information processing apparatus 11 (or, the information processing apparatus 11a or 11b) is a terminal device, the information processing apparatus 12 is a terminal device functioning as a host, and the information processing apparatus 13 is a server.

In the example illustrated in the drawing, the terminal device may include, for example, the wearable device 11-2, the on-vehicle device 11-3, the digital camera 11-5, the robot device, the device including a sensor that is installed together with facilities, and the CE device 11-6. These information processing apparatuses 11 (terminal devices) communicate with the information processing apparatus 12 via, for example, a network, such as Bluetooth (registered trademark) or Wi-Fi. In the drawing, a mobile device 12-1 is illustrated as an example of the terminal device that functions as a host. The network between the terminal device and the mobile device corresponds to the interface 250b or 450b in the example described above. The information processing apparatus 12 (mobile device) communicates with the information processing apparatus 13 (server) via a network, such as the Internet. The network between the mobile device and the server corresponds to the interface 350b in the example described above.

Furthermore, the example illustrated in FIG. 25 is illustrates so that an example in which the system 2 is implemented in a system that includes the terminal device functioning as a host can easily be understood, and the reason that the system 2 is not limited to this type of system is as explained in each of the examples described above. Furthermore, the terminal device functioning as a host is not limited to the mobile device 12-1 in the example illustrated in the drawing and various terminal devices having an appropriate communication function and processing function may function as a host. Furthermore, the wearable device 11-2, the on-vehicle device 11-3, the digital camera 11-5, and the CE device 11-6 illustrated in the drawing as examples of the terminal device do not exclude a terminal device other than these devices from the examples but are only examples of a typical terminal device that may be used as the information processing apparatus 11 in a case in which the information processing apparatus 12 is the mobile device 12-1.

### (Example of system including edge server)

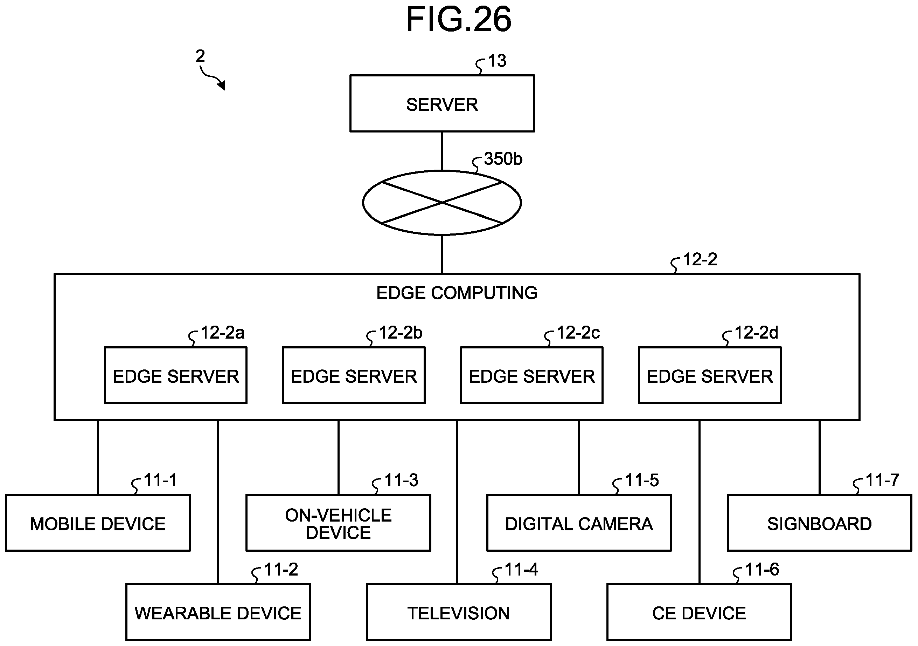

FIG. 26 is a diagram illustrating an example of a system that includes an edge server as one of more specific examples of the system configuration according to the embodiment of the present disclosure. In the example illustrated in the drawing, the information processing apparatus 11 (or the information processing apparatuses 11a or 11b) is a terminal device, the information processing apparatus 12 is an edge servers, and the information processing apparatus 13 is a server.

Similarly to the example described above with reference to FIG. 18, examples of the terminal device may include the mobile device 11-1, the wearable device 11-2, the on-vehicle device 11-3, the television 11-4, the digital camera 11-5, the CE device 11-6, the robot device, and the signboard 11-7. These information processing apparatuses 11 (terminal devices) communicate with the information processing apparatus 12 (an edge server 12-2) via a network. The network between the terminal device and the edge server corresponds to the interfaces 250b or 450b in the example described above. The information processing apparatus 12 (edge server) communicates with the information processing apparatus 13 (server) via, for example, a network, such as the Internet. The network between the edge server and the server corresponds to the interface 350b in the example described above.

In the example illustrated in FIG. 26, the edge server 12-2 (for example, edge servers 12-2a to 12-2d) is distributed at a position closer to the terminal device (the information processing apparatus 11) than the server 13, so that it is possible to implement a reduction in communication delay, an increase in a processing speed, and improvement real time performance.

Furthermore, the example illustrated in FIG. 26 is illustrated so that an example in which the system 2 is implemented in a system that includes the edge server can easily be understood, and the reason that the system 2 is not limited to this type of system is as explained in each of the examples described above.

### (Example of system including fog computing)

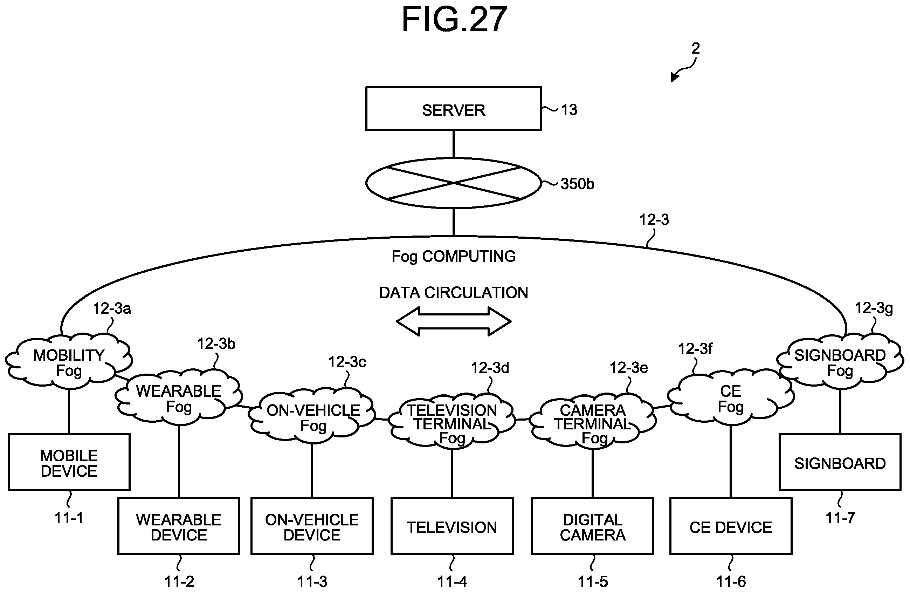

FIG. 27 is a diagram illustrating an example of a system that includes fog computing as one of more specific examples of the system configuration according to the embodiment of the present disclosure. In the example illustrated in the drawing, the information processing apparatus 11 (or the information processing apparatus 11a or 11b) is a terminal device, the information processing apparatus 12 is fog computing, and the information processing apparatus 13 is a server.

Similarly to the example described above with reference to FIG. 18, examples of the terminal device may include the mobile device 11-1, the wearable device 11-2, the on-vehicle device 11-3, the television 11-4, the digital camera 11-5, the CE device 11-6, the robot device, and the signboard 11-7. These information processing apparatuses 11 (terminal devices) communicate with the information processing apparatus 12 (a fog computing 12-3) via a network. The network between the terminal device and the fog computing corresponds to the interface 250b or 450b in the described above. The information processing apparatus 12 (fog computing) communicates with the information processing apparatus 13 (server) via a network, such as the Internet. The network between the fog computing and the server corresponds to the interface 350b in the example described above.

The fog computing 12-3 is distributed in an area closer to the device (the information processing apparatus 11) than the cloud (the server 13) in a distributed processing environment that is present between a cloud and devices. Specifically, the fog computing 12-3 serves as a system configuration including edge computing that is built using a mechanism for optimally arranging computing resources, in a distributed manner, classified by field or region.

In the example illustrated in FIG. 27, as an example, it is conceivable to use, as the fog computing 12-3, a mobility fog 12-3a that performs data management and a process on the mobile device 11-1; a wearable fog 12-3b that performs data management and a process on the wearable device 11-2; an on-vehicle device fog 12-3c that performs data management and a process on the on-vehicle device 11-3; a television terminal fog 12-3d that performs data management and a process on the television 11-4; a camera terminal fog 12-3e that performs data management and a process on the digital camera 11-5; a CE fog 12-3f that performs data management and a process on the CE device 11-6; and a signboard fog 12-3g that performs data management and a process on the signboard 11-7. Data circulation may be performed among the fogs with each other.

In fog computing, it is possible to distribute the computing resources at the position that is close to the devices and perform various processes, such as management, accumulation, or conversion of data, so that it is possible to implement a reduction in communication delay, an increase in a processing speed, and improvement real time performance.

Furthermore, the example illustrated in FIG. 27 is illustrated so that an example in which the system 2 is implemented in a system that includes the fog computing can easily be understood, and the reason that the system 2 is not limited to this type of system is as explained in each of the examples described above.

### (Tenth example)

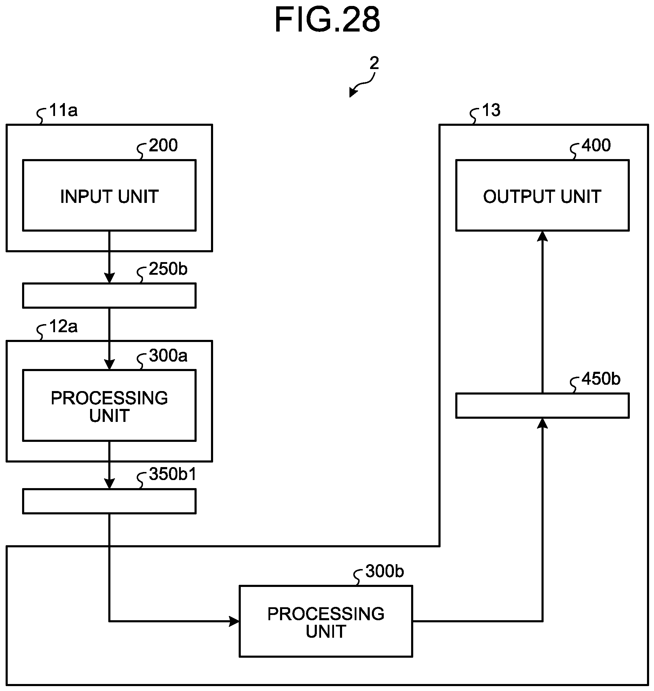

FIG. 28 is a block diagram illustrating a tenth example of the system configuration according to the embodiment of the present disclosure. With reference to FIG. 28, the system 2 includes the information processing apparatuses 11a, 12a, and 13. In the tenth example, the input unit 200 is implemented in the information processing apparatus 11a. Furthermore, the processing units 300 are implemented in the information processing apparatus 12a and the information processing apparatus 13 in a distributed manner. The output unit 400 is implemented in the information processing apparatus 13. The information processing apparatus 11a and the information processing apparatus 12a, and the information processing apparatus 12a and the information processing apparatus 13 communicate with each other via a network in order to implement the function according to the embodiment of the present disclosure.

The tenth example is an example in which, in the ninth example described above, the information processing apparatuses 11b and 12b are incorporated in the information processing apparatus 13. In other words, in the tenth example, the information processing apparatus 11a that implements the input unit 200 and the information processing apparatus 12a that implements the processing unit 300a are separate devices; however, both of the processing unit 300b and the output unit 400 are implemented by the same information processing apparatus 13.

The tenth example implements a configuration in which, for example, the information acquired by the input unit 200 included in the information processing apparatus 11a serving as a terminal device is provided to the information processing apparatus 13 that is a server or a terminal by way of a process performed by the processing unit 300a in the information processing apparatus 12a that is an intermediate terminal device or server and is then output from the output unit 400 by way of a process performed by the processing unit 300b. Furthermore, the intermediate process performed by the information processing apparatus 12a may also be omitted. This type of configuration may be used in a service that performs, for example, based on the information provided from the information processing apparatus 11a, a predetermined process in the server or the information processing apparatus 13 and then accumulates the results of the processes in the server or the information processing apparatus 13 or outputs the result of the process. The accumulated result of the process may be used by, for example, another service.

### (Eleventh example)

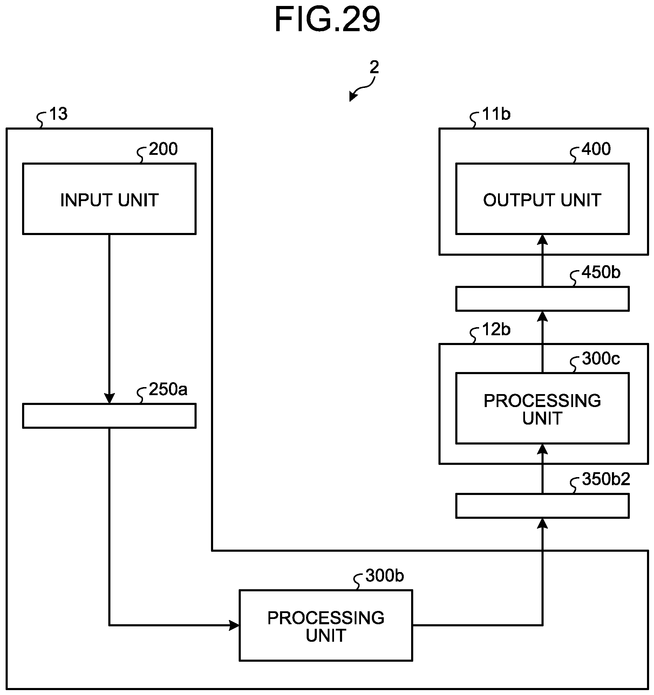

FIG. 29 is a block diagram illustrating an eleventh example of the system configuration according to the embodiment of the present disclosure. With reference to FIG. 29, the system 2 includes the information processing apparatuses 11b, 12b, and 13. In the eleventh example, the input unit 200 is implemented in the information processing apparatus 13. Furthermore, the processing units 300 are implemented in the information processing apparatus 13 and the information processing apparatus 12b in a distributed manner. The output unit 400 is implemented in the information processing apparatus 11b. The information processing apparatus 13 and the information processing apparatus 12b, and the information processing apparatus 12b and the information processing apparatus 11b communicate with each other via a network in order to implement the function according to the embodiment of the present disclosure.

The eleventh example is an example in which, in the ninth example described above, the information processing apparatuses 11a and 12a are incorporated in the information processing apparatus 13. In other words, in the eleventh example, the information processing apparatus 11b that implements the output unit 400 and the information processing apparatus 12b that implements the processing unit 300c are separate devices; however, the input unit 200 and the processing unit 300b are implemented by the same information processing apparatus 13.

The eleventh example implements a configuration in which, for example, the information acquired by the input unit 200 in the information processing apparatus 13 that is a server or a terminal device is provided to the information processing apparatus 12b that is an intermediate terminal device or server by way of the process performed by the processing unit 300b and is then output from the output unit 400 in the information processing apparatus 11b that is a terminal device by way of a process performed by the processing unit 300c. Furthermore, the intermediate process performed by the information processing apparatus 12b may also be omitted. This type of configuration may be used in a service that performs, for example, based on the information acquired in the server or the information processing apparatus 13, a predetermined process in the server or the information processing apparatus 13 and then provides the results of the processes in the service to the information processing apparatus 11b. The information to be acquired may be provided by, for example, a different service.

### [4-6. Others]

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. For example, the detecting unit 141 and the notifying unit 142 may also be integrated.

Furthermore, each of the embodiments and the modifications described above can be used in any appropriate combination as long as the processes do not conflict with each other.

Furthermore, the effects described in this specification is only exemplified and is not limited, and other effects may also be possible.

### (5. Effects of information processing apparatus according to the present disclosure)

As described above, the information processing apparatus (in the embodiment, the information processing apparatus 100, etc.) according to the present disclosure includes a control unit (in the embodiment, the control unit 140). The control unit detects, as sensing information, information that indicates an operation status of a device (in the embodiment, the home electrical appliance 10, etc.). Furthermore, when the sensing information is detected, the control unit refers to a storage unit (in the embodiment, the storage unit 130, etc.) that stores therein response content associated with the sensing information and judges whether to notify a user of the operation status of the device.

In this way, the information processing apparatus judges whether the operation status of the device related to the detected sensing information to be notified to the user, so that the information processing apparatus is able to notify the user of only needed information without generating a troublesome situation when the user uses a plurality of devices. Consequently, the information processing apparatus is able to prevent a reduction in convenience of the user and, also, smoothly operate a plurality of home electrical appliances.

Furthermore, the control unit detects, as sensing information, a notification sound that is emitted by the device in order to notify the user of the operation status, refers to, when the notification sound is detected, the storage unit that stores therein the response content that is associated with the notification sound, and judges whether to notify the user of the operation status of the device. Consequently, the information processing apparatus is able to judge whether to notify the user of the operation status related to the notification sound emitted by the device.

Furthermore, the control unit updates, based on a reaction received from the user after notifying the user of the operation status of the device, the response content that is associated with the sensing information stored in the storage unit. Consequently, the information processing apparatus is able to update the content to be notified to the user in accordance with a request of the user.

Furthermore, the control unit updates, based on the reaction received from the user, the setting that indicates whether to notify the user of the operation status of the device associated with the detected sensing information. Consequently, the information processing apparatus is able to appropriately update a judgement criterion related to a notification in accordance with the request of the user.

Furthermore, the control unit recognizes a voice received from the user and updates, based on the reaction of the user in accordance with a result of voice recognition, the setting that indicates whether to notify the user of the operation status of the device associated with the detected sensing information. Consequently, the information processing apparatus is able to update the response content based on the voice of the user without receiving an input operation, such as a key operation, from the user.

Furthermore, when the control unit notifies the user of the operation status of the device, the control unit notifies the user of, together with the operation status, the information related to a location in which the device is installed. Consequently, the information processing apparatus is able to notify the user of detailed information, such as information indicating which device at an installation location emits the notification sound.

Furthermore, the control unit identifies the device associated with the sensing information based on image recognition and notifies the user of the operation status of the device together with information on the identified device. Consequently, the information processing apparatus is able to notify the user of detailed information, such as information indicating which device emits the notification sound.

Furthermore, the control unit notifies the user of, together with the operation status of the device, at least one of a type of the device, a name of the device, and a location in which the device is installed. Consequently, the information processing apparatus is able to notify the user of detailed information, such as information indicating what kind of device emits the notification sound.

Furthermore, the control unit detects a position at which the user is located and judges, based on the positional relationship between a location position of the user and the device that is associated with the sensing information, whether to notify the user of the operation status of the device. Consequently, the information processing apparatus is able to notify only the user who is located nearby, so that the information processing apparatus is able to perform notification that is free from troublesome for the user.

Furthermore, the control unit detects a position at which the user is located and judges, based on a distance between the location position of the user and a position at which the device associated with the sensing information is installed, whether to notify the user of the operation status of the device. Consequently, the information processing apparatus is able to perform appropriate notification in accordance with the status, such as a case in which a notification is not given to the user who is present in the vicinity of the home electrical appliance.

Furthermore, the control unit judges whether to notify the user of the operation status of the device in accordance with orientation of a face or a body of the user at the timing at which the device emits information indicating the operation status or at the timing at which the information indicating the operation status of the device is detected as the sensing information. Consequently, the information processing apparatus is able to judge whether to perform notification in accordance with the actual state at the time of the sound being emitted, such as a state whether the user recognizes the sound emitted from the home electrical appliance.

Furthermore, the control unit detects an attribute of the user located in the vicinity of the information processing apparatus and judges, in accordance with the detected attribute of the user, whether to notify the user of the operation status of the device. Consequently, the information processing apparatus is able to perform notification in accordance with a detailed request of the user, such as a request that a notification be only given to adult users and be not given to a child user.

Furthermore, when the control unit notifies the user of the operation status of the device, the control unit notifies the user of, together with the operation status of the device, information in which labelling is previously performed on the sensing information. Consequently, the information processing apparatus is able to notify the user of the operation status of the device in more detail.

Furthermore, when the control unit detects, as the sensing information, an abnormal sound indicating that the operation status of the device is abnormal, the control unit notifies the user of, together with the operation status of the device, information indicating that an abnormal sound has been detected. Consequently, the information processing apparatus is able to certainly notify the user that an abnormal situation has occurred in the device.

Furthermore, the control unit detects, as the sensing information, at least one of pieces of information on light, temperature, humidity, odor, vibration, and carbon dioxide concentration observed around the device. Consequently, the information processing apparatus is able to certainly notify the user of the information related to an operation of the device even in a case the information is other than the notification sound.

### (6. Hardware configuration)

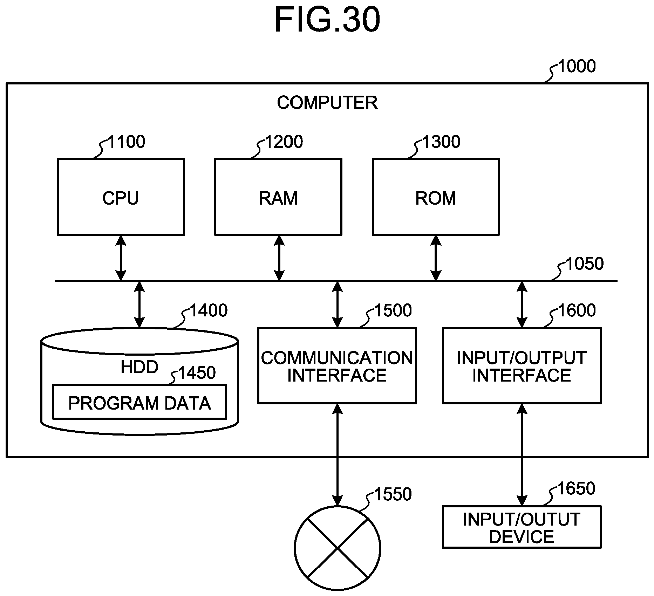

The information processing apparatus, such as the information processing apparatus 100 according to each of the embodiments described above, is implemented by, for example, a computer 1000 having a configuration illustrated in FIG. 30. In the following, a description will be given by using the information processing apparatus 100 according to the first embodiment as an example. FIG. 30 is a hardware configuration diagram illustrating an example of the computer 1000 that implements the function of the information processing apparatus 100. The computer 1000 includes a CPU 1100, a RAM 1200, a read only memory (ROM) 1300, a hard disk drive (HDD) 1400, a communication interface 1500, and an input/output interface 1600. Each of the units in the computer 1000 is connected by a bus 1050.

The CPU 1100 operates based on the programs stored in the ROM 1300 or the HDD 1400 and controls each of the units. For example, the CPU 1100 loads the programs stored in the ROM 1300 or the HDD 1400 into the RAM 1200 and executes the processes associated with various programs.

The ROM 1300 stores therein a boot program of a Basic Input Output System (BIOS) or the like that is executed by the CPU 1100 at the time of starting up the computer 1000 or a program or the like that depends on the hardware of the computer 1000.

The HDD 1400 is a computer readable recording medium that records therein, in a non-transitory manner, the programs executed by the CPU 1100, data that is used by these programs, and the like. Specifically, the HDD 1400 is a medium that records therein an information processing program according to the present disclosure that is an example of program data 1450.

The communication interface 1500 is an interface for connecting to an external network 1550 (for example, the Internet) by the computer 1000. For example, the CPU 1100 receives data from another device via the communication interface 1500 and sends data generated by the CPU 1100 to the other device.

The input/output interface 1600 is an interface for connecting an input/output device 1650 and the computer 1000. For example, the CPU 1100 receives data from an input device, such as a keyboard, a mouse, or a remote controller, via the input/output interface 1600. Furthermore, the CPU 1100 sends data to an output device, such as a display, a speaker, a printer, via the input/output interface 1600. Furthermore, the input/output interface 1600 may also function as a media interface that reads programs or the like recorded in a predetermined recording medium (media). An example of one of the media mentioned here includes an optical recording medium, such as a digital versatile disc (DVD) and a phase change rewritable disk (PD), a magneto-optical recording medium, such as magneto-optical disk (MO), a tape medium, a magnetic recording medium, a semiconductor memory, or the like.

For example, when the computer 1000 functions as the information processing apparatus 100 according to the first embodiment, the CPU 1100 in the computer 1000 implements the function of the control unit 140 or the like by executing the information processing program loaded onto the RAM 1200. Furthermore, the HDD 1400 stores therein the information processing program according to the present disclosure and the data included in the storage unit 130. Furthermore, the CPU 1100 reads the program data 1450 from the HDD 1400 and executes the programs; however, as another example, the CPU 1100 may also acquire these programs from the other device via the external network 1550.

Furthermore, the present technology can also be configured as follows.
(1) An information processing apparatus comprising:
   a control unit that performs
   a process of detecting, as sensing information, information that indicates an operation status of a device, and
   a process of judging, when the sensing information has been detected, by referring to a storage unit that stores therein response content that is associated with the sensing information, whether to notify a user of the operation status of the device.
(2) The information processing apparatus according to (1), wherein
   the control unit
   detects, as the sensing information, a notification sound that is emitted by the device in order to notify the user of the operation status, and
   judges, when the notification sound has been detected, by referring to the storage unit that stores therein the response content that is associated with the notification sound, whether to notify the user of the operation status of the device.
(3) The information processing apparatus according to (1) or (2), wherein the control unit updates, based on a reaction received from the user after notifying the user of the operation status of the device, the response content that is associated with the sensing information stored in the storage unit.
(4) The information processing apparatus according to (3), wherein the control unit updates, based on the reaction received from the user, setting that indicates whether to notify the user of the operation status of the device that is associated with the detected sensing information.
(5) The information processing apparatus according to (3) or (4), wherein
   the control unit
   recognizes a voice received from the user, and
   updates, based on the reaction of the user in accordance with a result of voice recognition, the setting that indicates whether to notify the user of the operation status of the device associated with the detected sensing information.
(6) The information processing apparatus according to any one of (1) to (5), wherein, when the control unit notifies the user of the operation status of the device, the control unit notifies the user of, together with the operation status, information related to a location in which the device is installed.
(7) The information processing apparatus according to any one of (1) to (6), wherein
   the control unit
   identifies the device associated with the sensing information based on image recognition, and
   notifies the user of the operation status of the identified device together with information on the identified device.
(8) The information processing apparatus according to (7), wherein the control unit notifies the user of, together with the operation status of the device, at least one of a type of the device, a name of the device, and a location in which the device is installed.
(9) The information processing apparatus according to any one of (1) to (8), wherein
   the control unit
   detects a position at which the user is located, and
   judges, based on a positional relationship between a location position of the user and the device that is associated with the sensing information, whether to notify the user of the operation status of the device.
(10) The information processing apparatus according to (9), wherein
   the control unit
   detects the position at which the user is located, and
   judges, based on a distance between the location position of the user and a position at which the device associated with the sensing information is installed, whether to notify the user of the operation status of the device.
(11) The information processing apparatus according to (9) or (10), wherein the control unit judges whether to notify the user of the operation status of the device in accordance with orientation of a face or a body of the user at a timing at which the device emits the information indicating the operation status or at a timing at which the information indicating the operation status of the device is detected as the sensing information.
(12) The information processing apparatus according to any one of (9) to (11), wherein
   the control unit
   detects an attribute of the user located in the vicinity of the information processing apparatus, and
   judges, in accordance with the detected attribute of the user, whether to notify the user of the operation status of the device.
(13) The information processing apparatus according to any one of (1) to (12), wherein, when the control unit notifies the user of the operation status of the device, the control unit notifies the user of, together with the operation status of the device, information in which labelling is previously performed on the sensing information.
(14) The information processing apparatus according to any one of (1) to (13), wherein, when the control unit detects, as the sensing information, an abnormal sound indicating that the operation status of the device is abnormal, the control unit notifies the user of, together with the operation status of the device, information indicating that an abnormal sound has been detected.
(15) The information processing apparatus according to any one of (1) to (14), wherein the control unit detects, as the sensing information, at least one of pieces of information on light, temperature, humidity, odor, vibration, and carbon dioxide concentration observed around the device.
(16) The information processing apparatus according to any one of (1) to (15), wherein the control unit controls a display of a notification on a display unit.
(17) The information processing apparatus according to any one of (1) to (16), wherein
   the control unit
   acquires a usage status of the information processing apparatus, and
   controls an output of a notification based on the usage status.
(18) The information processing apparatus according to (17), wherein the usage status includes information related to content that is output by the information processing apparatus.
(19) An information processing method performed by an information processing apparatus, the information processing method comprising:
   detecting, as sensing information, information that indicates an operation status of a device; and
   judging, when the sensing information has been detected, by referring to a storage unit that stores therein response content that is associated with the sensing information, whether to notify a user of the operation status of the device.
(20) An information processing program that causes an information processing apparatus to execute a process comprising:
   detecting, as sensing information, information that indicates an operation status of a device; and
   judging, when the sensing information has been detected, by referring to a storage unit that stores therein response content that is associated with the sensing information, whether to notify a user of the operation status of the device.

### Reference Signs List

- 1: information processing system
- 10: home electrical appliance
- 100: information processing apparatus
- 120: sensor
- 120A: voice input sensor
- 120B: image input sensor
- 121: input unit
- 122: communication unit
- 130: storage unit
- 131: response content table
- 132: device information table
- 133: temporary storage area
- 134: user information table
- 140: control unit
- 141: detecting unit
- 142: notifying unit
- 143: UI unit

## Claims

1. An information processing apparatus comprising:
a control unit that performs
a process of detecting, as sensing information, information that indicates an operation status of a device, and
a process of judging, when the sensing information has been detected, by referring to a storage unit that stores therein response content that is associated with the sensing information, whether to notify a user of the operation status of the device.

2. The information processing apparatus according to claim 1, wherein
the control unit
detects, as the sensing information, a notification sound that is emitted by the device in order to notify the user of the operation status, and
judges, when the notification sound has been detected, by referring to the storage unit that stores therein the response content that is associated with the notification sound, whether to notify the user of the operation status of the device.

3. The information processing apparatus according to claim 1, wherein the control unit updates, based on a reaction received from the user after notifying the user of the operation status of the device, the response content that is associated with the sensing information stored in the storage unit.

4. The information processing apparatus according to claim 3, wherein the control unit updates, based on the reaction received from the user, setting that indicates whether to notify the user of the operation status of the device that is associated with the detected sensing information.

5. The information processing apparatus according to claim 3, wherein
the control unit
recognizes a voice received from the user, and
updates, based on the reaction of the user in accordance with a result of voice recognition, the setting that indicates whether to notify the user of the operation status of the device associated with the detected sensing information.

6. The information processing apparatus according to claim 1, wherein, when the control unit notifies the user of the operation status of the device, the control unit notifies the user of, together with the operation status, information related to a location in which the device is installed.

7. The information processing apparatus according to claim 1, wherein
the control unit
identifies the device associated with the sensing information based on image recognition, and
notifies the user of the operation status of the identified device together with information on the identified device.

8. The information processing apparatus according to claim 7, wherein the control unit notifies the user of, together with the operation status of the device, at least one of a type of the device, a name of the device, and a location in which the device is installed.

9. The information processing apparatus according to claim 1, wherein
the control unit
detects a position at which the user is located, and
judges, based on a positional relationship between a location position of the user and the device that is associated with the sensing information, whether to notify the user of the operation status of the device.

10. The information processing apparatus according to claim 9, wherein
the control unit
detects the position at which the user is located, and
judges, based on a distance between the location position of the user and a position at which the device associated with the sensing information is installed, whether to notify the user of the operation status of the device.

11. The information processing apparatus according to claim 9, wherein the control unit judges whether to notify the user of the operation status of the device in accordance with orientation of a face or a body of the user at a timing at which the device emits the information indicating the operation status or at a timing at which the information indicating the operation status of the device is detected as the sensing information.

12. The information processing apparatus according to claim 9, wherein
the control unit
detects an attribute of the user located in the vicinity of the information processing apparatus, and
judges, in accordance with the detected attribute of the user, whether to notify the user of the operation status of the device.

13. The information processing apparatus according to claim 1, wherein, when the control unit notifies the user of the operation status of the device, the control unit notifies the user of, together with the operation status of the device, information in which labelling is previously performed on the sensing information.

14. The information processing apparatus according to claim 1, wherein, when the control unit detects, as the sensing information, an abnormal sound indicating that the operation status of the device is abnormal, the control unit notifies the user of, together with the operation status of the device, information indicating that an abnormal sound has been detected.

15. The information processing apparatus according to claim 1, wherein the control unit detects, as the sensing information, at least one of pieces of information on light, temperature, humidity, odor, vibration, and carbon dioxide concentration observed around the device.

16. The information processing apparatus according to claim 1, wherein the control unit controls a display of a notification on a display unit.

17. The information processing apparatus according to claim 1, wherein
the control unit
acquires a usage status of the information processing apparatus, and
controls an output of a notification based on the usage status.

18. The information processing apparatus according to claim 17, wherein the usage status includes information related to content that is output by the information processing apparatus.

19. An information processing method performed by an information processing apparatus, the information processing method comprising:
detecting, as sensing information, information that indicates an operation status of a device; and
judging, when the sensing information has been detected, by referring to a storage unit that stores therein response content that is associated with the sensing information, whether to notify a user of the operation status of the device.

20. An information processing program that causes an information processing apparatus to execute a process comprising:
detecting, as sensing information, information that indicates an operation status of a device; and
judging, when the sensing information has been detected, by referring to a storage unit that stores therein response content that is associated with the sensing information, whether to notify a user of the operation status of the device.
